(19)

**Europäisches Patentamt**
**European Patent Office**
**Office européen des brevets**

(11)  **EP 4 637 075 A1**

(12)  **EUROPEAN PATENT APPLICATION**

(43) Date of publication:
**22.10.2025  Bulletin 2025/43**

(21) Application number: **24315176.8**

(22) Date of filing: **15.04.2024**

(51) International Patent Classification (IPC):
***H04L 9/00*** *(2022.01)*

(52) Cooperative Patent Classification (CPC):
**H04L 9/008**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Zama SAS**
**75002 Paris (FR)**

(72) Inventors:
• **Bernard, Olivier Louis André**
  **75002 Paris (FR)**
• **Joye, Marc Francois**
  **75002 Paris (FR)**

(74) Representative: **DeltaPatents B.V.**
**Fellenoord 370**
**5611 ZL Eindhoven (NL)**

(54)  **APPROXIMATE GADGET DECOMPOSITION USEFUL FOR FULLY HOMOMORPHIC ENCRYPTED COMPUTATION**

(57)  Some embodiments are directed to a cryptographic method (500) for an approximate gadget decomposition of an integer, a cryptographic method (510) for computing a gadget vector for use with an approximate gadget decomposition of an integer and/or a cryptographic method (520) for reconstructing an approximation of an integer from an approximate gadget decomposition of the integer.

*Fig. 2*

EP 4 637 075 A1

**Description**

**TECHNICAL FIELD**

The presently disclosed subject matter relates to a method for an approximate gadget decomposition of an integer, a method for computing a gadget vector, a method for reconstructing an approximation of an integer from an approximate gadget decomposition of the integer, a method for a fully homomorphic encrypted computation, a system, and a computer storage medium.

**BACKGROUND**

CRT gadget decomposition refers to the process of breaking down a number into a set of smaller integers based on the Chinese Remainder Theorem (CRT), where each integer corresponds to the remainder of the original number modulo different, pairwise coprime bases. This technique enables the efficient representation and manipulation of large numbers by transforming them into parallelizable, modular arithmetic operations across these bases. It is particularly useful in cryptographic applications, such as homomorphic encryption, where operations on encrypted data can be optimized through operations on these decomposed, modular components.

Homomorphic cryptography allows one to execute computer programs, e.g., circuit evaluations, function evaluations, etc., over encrypted data by a party without that party being able to decrypt. For example, input data and computation results may be received and returned in encrypted form. Intermediate data, e.g., an internal state of the computation, may also be in encrypted form. Even though the output of the computer program is returned in an encrypted form, when decrypted the output is expected to be the same, or very close to, as if the operations had been performed on the unencrypted data. Homomorphic encryption can be used for privacy-preserving outsourced storage and computation. This allows for example data to be encrypted and outsourced to a cloud environment for processing and/or storage, all while encrypted. In particular, homomorphic cryptography techniques exist that can be used, at least in principle, to compute any function on encrypted data. Such techniques are referred to as "fully homomorphic encryption" (FHE) techniques.

The execution environment is provided by various homomorphic encryption techniques. One such homomorphic encryption system is described in I. Chillotti et al., TFHE: Fast fully homomorphic encryption over the torus. Journal of Cryptology, 33(1):34-91, 2020 (incorporated herein by reference). Generally, TFHE-like homomorphic encryption schemes can be based on lattice encryption, e.g., LWE, LWR or NTRU encryption, and their variants.

Gadget decomposition enhances the efficiency of Fully Homomorphic Encryption (FHE) schemes by splitting elements as vectors of smaller chunks whose inner products with the corresponding gadget vector rebuilds (an approximation of) the original elements. This decomposition reduces the computational complexity and memory requirements of operations on encrypted data, making FHE more practical for real-world applications. Moreover, it improves the overall performance of FHE systems, enabling them to support more complex computations and larger datasets within reasonable time frames and computational resources.

For example, radix-based decomposition involves representing a number in a base (or radix), e.g., a power of 2 or 10, breaking down a large number into a series of digits in that base.

For example, Chinese Remainder Theorem (CRT)-based decomposition, on the other hand, represents a number as a set of residues modulo a sequence of pairwise coprime integers. The Chinese Remainder Theorem allows computation of a gadget vector and to recompute the original integer from the gadget representation. Like radix-based gadget representation it breaks operations on large numbers into smaller, independent modular operations that may even be performed in parallel. CRT decomposition is advantageous as it allows more operations to be performed component wise than radix-based representation. For example, to multiply two numbers in CRT gadget decomposition one can simply multiply the representations component wise. This does not work for radix-based representation.

On the other hand, radix-based decomposition easily allows an approximate gadget representation by discarding the least significant digits. Likewise, the corresponding gadget vector can be truncated to work with the truncated gadget representation. Thus, the amount of space allocated to an integer, and correspondingly, the amount of time spent on computing with the number can easily be scaled back for integers in radix-based representation. This does not work for CRT based representation, discarding even one integer from an integer in a CRT gadget decomposition would completely change the resulting number after reconstruction.

There is a need for obtaining CRT-based gadget decompositions in the approximate setting. At present CRT-based gadget decompositions are only known for the exact setting. This finds applications in fully homomorphic encryption; in particular, it enables supporting arithmetic on operands larger than the machine word.

## SUMMARY

It would be advantageous to have an improved approximate gadget decomposition. Preferable, an approximate gadget decomposition that allows approximate representation, but also component wise computations.

In an embodiment, a method for approximate gadget decomposition of an integer is provided. The method may comprise:

- obtaining an input integer modulo a modulus. For example, the input integer may be a parameter in a computation, e.g., a weight in a neural network, etc.
- obtaining a first modulus and a second modulus, wherein the modulus is a product of the first modulus and the second modulus , the first and second moduli being relatively prime and larger than 1. Either one or both of the moduli may be obtained in the form of a first or second sequence of integers, the product of which equals the modulus.
- obtaining a second sequence of integers for the second modulus, wherein the second sequence has at least two integers, the product of the integers of the second sequence equals the second modulus , the integers of the second sequence being pairwise co-prime, and the integers are larger than 1.
- computing the approximate gadget decomposition by computing a representative for a difference modulo each of the integers in the second sequence corresponding to the second modulus , wherein the difference is between the input integer and an integer congruent to the input integer modulo the first modulus. The difference may first be computed in the integers or in a larger modulus, alternatively, the difference may be compute modulo the integers in the second sequence directly.

In an embodiment, a cryptographic method for computing a gadget vector is provided. The method may comprise

- obtaining a first modulus and a second modulus, wherein the modulus is a product of the first modulus and the second modulus, the first and second moduli being relatively prime and larger than 1,
- obtaining a second sequence of integers for the second modulus, wherein the second sequence has at least two integers, the product of the second sequence equals the second modulus, the second sequence of integers are pairwise co-prime, and the integers are larger than 1,
- computing the sequence, by multiplying for each integer in the second sequence:
- the second modulus divided by the integer,
- the first modulus.

Note that the last computation may include additional factors. This is not necessary, and in fact, one can take only the factors listed above. Optionally the additional factor may comprise an inverse modulo the integer of one of:

- the first modulus times the second modulus divided by the integer,
- the second modulus divided by the integer,
- the first modulus.

Depending on the option chosen appropriate changes may be made to computing the gadget decomposition.
In an embodiment, a method for reconstructing an approximation of an integer from an approximate gadget decomposition of the integer is provided. The method may comprise,

- obtaining an approximate gadget decomposition of the integer,
- obtaining a corresponding gadget vector
- computing the dot product of the obtained approximate gadget decomposition and the corresponding gadget vector. The dot product is sometimes referred to as the inner product.

Each of the methods may be implemented on an electronic device, in particular on a computer. A computer may comprise one or more of a processor, an FPGA, and an ASIC.
The methods described herein may be applied in a wide range of practical applications. Such practical applications include FHE cryptography.
An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading. This aspect is used when the computer program is uploaded into a server, and when the computer program is available for downloading from such a server.

**BRIEF DESCRIPTION OF DRAWINGS**

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a computation system,
Figure 1b schematically shows an example of an embodiment of a computation system,
Figure 2 schematically shows an example of an embodiment of a device for an approximate gadget decomposition of an integer,
Figure 3 schematically shows an example of an embodiment of a device for an approximate gadget decomposition of an integer,
Figure 4a schematically shows an example of an embodiment of a device for computing a gadget vector,
Figure 4b schematically shows an example of an embodiment of a device for computing a gadget vector,
Figure 5 schematically shows an example of an embodiment of a method for an approximate gadget decomposition of an integer, a method for computing a gadget vector, a method for reconstructing an approximation of an integer from an approximate gadget decomposition of the integer,
Figure 6a schematically shows a computer readable medium having a writable part comprising a computer program according to an embodiment,
Figure 6b schematically shows a representation of a processor system according to an embodiment.

**Reference signs list**

The following list of references and abbreviations corresponds to the figures, and is provided for facilitating the interpretation of the drawings and shall not be construed as limiting the claims.

100, 102    a computing system
110             a device for an approximate gadget decomposition of an integer
120             a device for computing a gadget vector
130             a device for a fully homomorphic encrypted computation
140             a device for reconstructing an approximation of an integer from an approximate gadget decomposition of the integer

111, 121, 131, 141    a processor system
112, 122, 132, 142    storage
113, 123, 133, 143    communication interface
172                             computer network

200             a device for approximate gadget decomposition
210             an input integer
211             a modulus ($Q$)
220             a first modulus ($Q_L$)
230             a second modulus ($Q_H$)
231, 232     integer in a second sequence of integers
250             an approximate gadget decomposition
251, 252     approximate gadget decomposition element
240             an integer modulo the first modulus
241             a difference

300             a device for approximate gadget decomposition

| | |
|---|---|
| 310 | an input integer |
| 311 | a modulus ($Q$) |
| 320 | a first modulus ($Q_L$) |
| 321, 322 | integer in a second sequence of integers |
| 330 | a second modulus ($Q_H$) |
| 331, 332 | integer in a second sequence of integers |
| 350 | an approximate gadget decomposition |
| 351, 352 | approximate gadget decomposition element |
| 360 | an integer modulo an integer in sequence 331-332 |
| 371 | a product |
| | |
| 400, 401 | a device for computing a gadget vector |
| 411 | a modulus ($Q$) |
| 420 | a first modulus ($Q_L$) |
| 430 | a second modulus ($Q_H$) |
| 431, 432 | integer in a second sequence of integers |
| 470 | a CRT gadget vector |
| 471, 472 | a CRT gadget vector element |
| 421 | an integer for multiplication |
| 480 | a gadget vector |
| 481, 482 | a gadget vector element |
| 461 | the second modulus ($Q_H$) divided by the integer ($q_j$) |
| 451 | the first modulus times integer 461 |
| 452 | the inverse of integer 451 |
| 500 | a cryptographic method for an approximate gadget decomposition of an integer |
| 510 | a cryptographic method for computing a gadget vector |
| 520 | a cryptographic method for reconstructing an approximation of an integer from an approximate gadget decomposition of the integer, |
| | |
| 1000, 1001 | a computer readable medium |
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

## DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

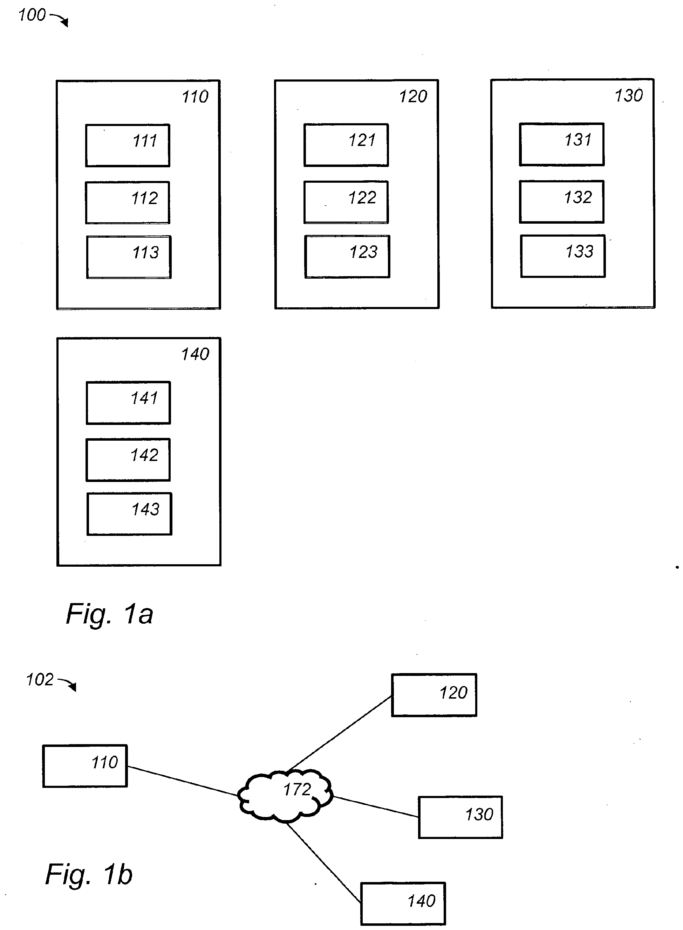

**Figure 1a** schematically shows an example of an embodiment of a device for an approximate gadget decomposition 110, an embodiment of a device for computing a gadget vector 120, an embodiment of a device for FHE computation 130, and an embodiment of device for reconstructing an approximation of an integer 140.

A device for an approximate gadget decomposition 110, device for computing a gadget vector 120, device for FHE computation 130, and device for reconstructing an approximation of an integer 140 may be part of a computing system 100.

Device for an approximate gadget decomposition 110 is configured to compute an approximate gadget decomposition of an integer. An approximate gadget decomposition decomposes an integer into a vector of bounded integers whose inner product with a corresponding gadget vector approximates the original integer.

Device 110 may obtain an input integer, e.g., receive it, and compute for it the approximate gadget decomposition with respect to a series of integers. Device for computing a gadget vector 120 is configured to compute a gadget vector for use with an approximate gadget decomposition of an integer.

Having one or more integers in approximate gadget decomposition allows efficient computation with those integers. For example, an approximate gadget decomposition needs fewer integers in its representation than an exact gadget decomposition would. For example, integers in approximate gadget decomposition can be added, subtracted, multiplied, etc., by performing these operations elementwise. To make the transition back to a regular representation, e.g., as an integer modulo some modulus, the inner product with a so-called gadget vector can be computed. For integers in approximate gadget representation, a special gadget vector may be used, to best approximate the integer after conversion back from gadget representation to regular representation.

One particular advantageous application of approximate gadget approximation is in fully homomorphic encrypted (FHE) computation. Fully Homomorphic Encryption (FHE) is a cryptographic system that allows for arbitrary computations to be performed on encrypted data without needing to decrypt it first, thereby preserving the confidentiality of the data. This means that a third party can compute functions on the encrypted data, producing encrypted results that, once decrypted, would match the outcome of the same operations if they were performed on the plaintext.

Device for FHE computation 130 is configured to perform for a fully homomorphic encrypted computation comprising in which at least some of the integers are represented in an approximate gadget representation. Note that an approximate gadget representation can be applied to FHE encrypted data as well. This allows the same type of operations, e.g., operations on one or more component wise FHE encrypted integers in approximate gadget representation. In this case the operations are performed using FHE operations on the encrypted components. Operations may also be between unencrypted and encrypted integers. This can be advantageous since such operations typically require fewer resources.

Device for reconstructing an approximation of an integer 140 is configured to reconstruct an approximation of an integer from an approximate gadget decomposition of the integer. For example, an integer in gadget representation may be obtained as a result of an FHE computation. If the secret key is available, e.g., by a client of the system, the encrypted elements may be decrypted and the reconstruction may be performed. Interestingly, the conversion from approximated gadget representation can be performed while in FHE encryption as well. This would take as input an integer in approximated gadget representation and produce a regular integer, e.g., modulo a modulus, but still in FHE encryption.

Device for an approximate gadget decomposition 110 may comprise a processor system 111, a storage 112, and a communication interface 113. Device for computing a gadget vector 120 may comprise a processor system 121, a storage 122, and a communication interface 123. Device for FHE computation 130 may comprise a processor system 131, a storage 132, and a communication interface 133. Device for reconstructing an approximation of an integer 140 may comprise a processor system 141, a storage 142, and a communication interface 143.

Devices 110, 120, 130 and 140 are represented here as devices, though each one of them could just as well be implemented as systems, e.g., a geographically distributed system, e.g., a cloud computing system, e.g., a system comprising multiple computers. Devices 110, 120, 130 and 140 are represented here are separate device, though in practice many of their functions will be integrated in a single device or system. For example, in an embodiment, a device may be configured for an approximate gadget decomposition of an integer, as well as for reconstructing an approximation of an integer from an approximate gadget decomposition of the integer. The device could receive a gadget vector, though could compute the gadget vector instead. For example, a device could be configured for an approximate gadget decomposition of an integer, for reconstructing an approximation of an integer from an approximate gadget decomposition of the integer, for computing a gadget vector, and for a fully homomorphic encrypted computation. Other combinations are possible.

In the various embodiments of communication interfaces 113, 123, 133, and/or 143, the communication interfaces may be selected from various alternatives. For example, the interface may be a network interface to a local or wide area network, e.g., the Internet, a storage interface to an internal or external data storage, an application interface (API), etc.

Storage 112, 122, 132, and 142 may be, e.g., electronic storage, magnetic storage, etc. The storage may comprise local storage, e.g., a local hard drive or electronic memory. Storage 112, 122, 132, and 142 may comprise non-local storage, e.g., cloud storage. In the latter case, storage 112, 122, 132, and 142 may comprise a storage interface to the non-local storage. Storage may comprise multiple discrete sub-storages together making up storage 112, 122, 132, and 142.

Storage 112, 122, 132, and 142 may be non-transitory storage. For example, storage 112, 122, 132, and 142 may store data in the presence of power such as a volatile memory device, e.g., a Random Access Memory (RAM). For example, storage 112, 122, 132, and 142 may store data in the presence of power as well as outside the presence of power such as a non-volatile memory device, e.g., Flash memory. Storage may comprise a volatile writable part, say a RAM, a non-volatile writable part, e.g., Flash, Storage may comprise a non-volatile non-writable part, e.g., ROM.

The devices 110, 120, 130, and 140 may communicate internally, with each other, with other devices, external storage, input devices, output devices, and/or one or more sensors over a computer network. The computer network may be an internet, an intranet, a LAN, a WLAN, a WAN, etc. The computer network may be the Internet. The devices 110, 120, 130, and 140 may comprise a connection interface which is arranged to communicate within system 100 or outside of system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 113 may be used to send or receive digital data, e.g., receive in input integer, send an approximate gadget decomposition of an integer. The communication interface 123 may be used to send or receive digital data, e.g., to receive moduli, a sequence of integers, and to send a gadget vector. The communication interface 133 may be used to send or receive digital data, e.g., receive FHE encrypted input data, send receive FHE encrypted output data. The communication interface 133 may be used to receive unencrypted integers, possibly in approximated gadget format, for use in the computation. The communication interface 143 may be used to send or receive digital data, e.g., to communicate with other server devices, e.g., to receive an integer in approximated gadget format, to send a reconstructed integer.

The execution of devices 110, 120, 130, and 140 may be implemented in a processor system. The devices 110, 120, 130, and 140 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 110, 120, 130, and 140 may comprise multiple processors. A processor circuit may be implemented in a distributed fashion, e.g., as multiple sub-processor circuits. For example, devices 110, 120, 130, and 140 may use cloud computing.

Typically, the device for an approximate gadget decomposition 110, device for computing a gadget vector 120, device for FHE computation 130, and device for reconstructing an approximation of an integer 140, each comprise one or more microprocessors which executes appropriate software stored at the device; for example, that software may have been downloaded and/or stored in a corresponding memory, e.g., a volatile memory such as RAM or a non-volatile memory such as Flash.

Instead of using software to implement a function, the devices 110, 120, 130, and/or 140 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, any one of processor systems 111, 121, 131, 141 may comprise an FPGA and/or ASIC configured for a method according to an embodiment or for part thereof.

For example, the circuits may be implemented in CMOS, e.g., using a hardware description language such as Verilog, VHDL, etc. In particular, devices 110, 120, 130, and 140 may comprise circuits, e.g., for cryptographic processing, and/or arithmetic processing.

In hybrid embodiments, functional units are implemented partially in hardware, e.g., as coprocessors, e.g., cryptographic coprocessors, and partially in software stored and executed on the device.

**Figure 1b** schematically shows an example of an embodiment of a computing system 102. System 102 may comprise multiple devices of the types 110, 120, 130 and/or 140. The devices are connected through a computer network 172, e.g., the Internet.

This application uses FHE computation as a motivating example. Indeed, approximate CRT gadget decompositions are very useful in FHE computation. Although most of this document will assume application in this field, this is exemplary, and other applications are possible. For example, CRT decompositions are used, e.g., in Digital Signal Processing (DSP). In DSP, especially in the context of fast Fourier transforms (FFTs) and convolution, CRT can be used to decompose computations into smaller, more manageable problems. By applying CRT, a problem can be divided into subproblems modulo different bases, solved in parallel, and then recombined. This approach can lead to more efficient implementations of FFTs and convolution, which are fundamental operations in signal processing, affecting applications in audio processing, image compression, and telecommunications. A consequence of using CRT is that computations are necessarily exact, as the CRT representation cannot conventionally be truncated. In an embodiment, the above DSP may use an embodiment of the approximated CRT gadget decomposition.

**Notation**

Elements in $\mathbb{Z}/q\mathbb{Z}$, the ring of integers modulo $q$, are typically viewed as integers in the integer range $[-\lfloor q/2 \rfloor, \lfloor q/2 \rfloor]$, where $\lfloor \cdot \rfloor$ denotes the flooring function. For example, for $q = 5$, $[5/2] = 2$ and elements of $\mathbb{Z}/5\mathbb{Z}$ are represented by the set {-2, -1,0,1,2}. When integers modulo $q$ are seen as integers, or more precisely by their integer representatives, this is indicated by the lifting function; for an integer $a \in \mathbb{Z}/q\mathbb{Z}$, it is denoted by $(a \bmod q)_{\mathbb{Z}}$ or sometimes, more simply, as $(a)_{\mathbb{Z}}$. The lift function is a function that maps elements from $\mathbb{Z}/q\mathbb{Z}$ the ring of integers modulo $q$ to a specific set of integer representatives.

The preferred set of representatives is always centered around zero, as smaller representatives lead to smaller error. For example, representatives sets for (a mod q) may be a signed integer in $[-\lfloor q/2 \rfloor, \lfloor (q-1)/2 \rfloor]$, $[-\lfloor (q-1)/2 \rfloor, \lfloor q/2 \rfloor]$, or $[-\lfloor q/2 \rfloor, \lfloor q/2 \rfloor]$. In the latter case, this representation is not unique if 2 divides q. Another useful set of representatives, that avoids negative numbers is [0, $q$ - 1].

Vectors are given in row representation and denoted by bold letters *v*. Polynomials, as well as algebraic integers, are denoted by cursive letters *a*.

It is not necessary for the elements in $\mathbb{Z}/q\mathbb{Z}$, to use, e.g., the integer range $[-\lfloor q/2 \rfloor, \lfloor q/2 \rfloor]$. Instead, say, the range [0, $q$ - 1] may be used, or even other ranges. However, in general, computation is faster, and representations are more accurate if the former interval is used.

**Fully Homomorphic Encryption**

One of the issues to deal with for fully homomorphic encryption is the noise growth. This can be controlled to some extent thanks to a so-called gadget decomposition [13]. A gadget decomposition splits elements as vectors of smaller chunks whose inner products with the corresponding gadget vector rebuilds (an approximation of) the original elements.

In particular, gadget decompositions are used in this context to perform, e.g., the multiplication of a ciphertext by a scalar. Multiplying a noisy ciphertext by a scalar may result in a ciphertext whose noise error exceeds tolerated bounds. One way to control noise growth is to decompose the scalar with respect to a small radix [4, 6]. This technique has been applied in a number of fully homomorphic encryption schemes - at the heart of the encryption process or as an auxiliary tool for accompanying gadgets or procedures; see e.g., [5, 13, 4, 11, 1, 10, 7, 8, 3].

**Definitions**

Formally, we give a generic definition inspired from [8], on a general *R*-module for some algebraic ring *R*. Examples of interest include (but are not limited to) $R = \mathbb{Z}, R = \mathbb{Z}/q\mathbb{Z}, R = \mathbb{Z}[X], R = \mathbb{Z}[x]/\langle f(x) \rangle$ for some irreducible monic polynomial *f,* and $R = (\mathbb{Z}/q\mathbb{Z})[x]/\langle f(x) \rangle$; respectively, the ring of integers, the ring of integers modulo *q,* the ring of polynomials modulo *f* with integer coefficients, and the ring of polynomials modulo *f* with coefficients in $\mathbb{Z}/q\mathbb{Z}$. The definition naturally extends to e.g., matrices defined over these structures. A gadget decomposition is characterized by three parameters: level $\ell$, quality $\beta$, and precision $\varepsilon$.

[Gadget Decomposition] Let $\mathcal{M}$ be a *R*-module for some ring *R*. A gadget decomposition on $\mathcal{M}$ of level $\ell$, quality $\beta$ and precision $\varepsilon$ is given by:

1. a gadget vector **g** = $(g_1, \dots, g_\ell) \in \mathcal{M}^\ell$;

2. an efficient algorithm $\nabla := \nabla_{\mathbf{g}}^{\beta, \varepsilon} : \mathcal{M} \rightarrow R^\ell$ s.t. for any $a \in \mathcal{M}$: $\|\nabla a\|_\infty \leq \beta$ and $\|a - \langle \nabla a, \mathbf{g} \rangle\|_\infty \leq \varepsilon$.

where the infinity norms are taken coefficient-wise.

A natural method for handling large integers using small arithmetic units is to rely on the Chinese Remainder Theorem (CRT) [15]. Though gadget decompositions were first based on binary or radix-*B* representation of integers [13], which is sometimes called "Canonical Gadget Decomposition" as in [8], alternative decompositions have been introduced based on the mixed-radix representation [12] or the CRT representation [2].

However, the CRT-based gadget decomposition is extremely sensitive to errors, as these are getting spread by the inverse CRT isomorphism. In turn, this implies that the gadget decomposition is required to be exact, which has unfortunate consequences both in terms of computational costs and key sizes, that outweigh the benefits of using the CRT-based decomposition in the first place.

In embodiments, an approximate (e.g., non-exact) CRT-based gadget decomposition is used. It combines the advantages of a non-exact decomposition with those of a CRT-based decomposition. This leads for example to more efficient implementations in various use-cases, e.g., as detailed herein.

In an embodiment, a modulus $Q$ is decomposed into a high part and a low part, which serve as a first basis for decomposition. Given two co-prime moduli $Q_{high}$ and $Q_{low}$, letting $Q = Q_{low} Q_{high}$, any value $a$ modulo $Q$ can be recovered from $a_{low}: = a \bmod Q_{low}$ and $a_{high:} = a \bmod Q_{high}$ as

$$a = a_{\text{low}} + Q_{\text{low}} \cdot (Q_{\text{low}}^{-1}(a_{\text{high}} - a_{\text{low}}) \bmod Q_{\text{high}}).$$

We will also refer to $Q_{high}$ as $Q_H$ or the second modulus; we will also refer to $Q_{low}$ as $Q_L$ or the first modulus.

Interestingly, we observe that $((a - a_{\text{low}})/Q_{\text{low}})_{\mathbb{Z}} \equiv Q_{\text{low}}^{-1}(a_{\text{high}} - a_{\text{low}})$ modulo $Q_{high}$. When $Q_{\text{high}} = \prod_{j=1}^{\ell} q_j$ is a product of pairwise co-prime integers, the exact CRT gadget decomposition modulo $q_1, \ldots,$ $q_\ell$ of $Q_{\text{low}}^{-1}(a_{\text{high}} - a_{\text{low}}) \bmod Q_{\text{high}}$ yields $(a - a_{\text{low}})/Q_{\text{low}}$. The exact CRT gadget decomposition of an integer $x$ for a sequence of $q_1, \ldots, q_\ell$ are the remainders of $x$ modulo each of the integers in the sequence. The remainders are chosen in a set of representatives; preferably, this is a set centered around 0.

In turn, incorporating the multiplicative factor $Q_{low}$ into the gadget vector yields, after reconstruction, $(a - a_{low})$, which can be seen as an approximation of $a$. One can for example define the gadget vector **g** as the one-dimensional vector of value $Q_{\text{low}}(Q_{\text{low}}^{-1} \bmod Q_{\text{high}})$, and define the decomposition $\nabla_{\mathbf{g}} a$ as the one-dimensional vector of value $a_{\text{high}} - (a \bmod Q_{\text{low}})_{\mathbb{Z}} \bmod Q_{\text{high}}$. Then, it can be checked that, modulo $Q$,

$$\begin{aligned} \langle \nabla_{\mathbf{g}} a, \mathbf{g} \rangle &= Q_{\text{low}}(Q_{\text{low}}^{-1} \bmod Q_{\text{high}}) \cdot (a_{\text{high}} - (a \bmod Q_{\text{low}})_{\mathbb{Z}} \bmod Q_{\text{high}}) \\ &= Q_{\text{low}} \cdot (Q_{\text{low}}^{-1}(a_{\text{high}} - a_{\text{low}}) \bmod Q_{\text{high}}) \\ &= a - a_{\text{low}} \approx a. \end{aligned}$$

The above description assumes that $R = \mathbb{Z}$ and $\mathcal{M} = \mathbb{Z}/Q\mathbb{Z}$. It however readily adapts to more general $R$-modules. For example, the example can be extended to polynomials, by applying it to the coefficients.

Note that both parts, modulo $Q_{low}$ and modulo $Q_{high}$, can be further decomposed in a CRT fashion. This is useful for example is $Q_{high}$ and/or $Q_{low}$ are large and/or the underlying architecture only supports working on smaller operands.

Hence, the total size of the low part controls the precision of the decomposition, whilst the size of the CRT moduli controls its quality, e.g., in turn, the noise growth.

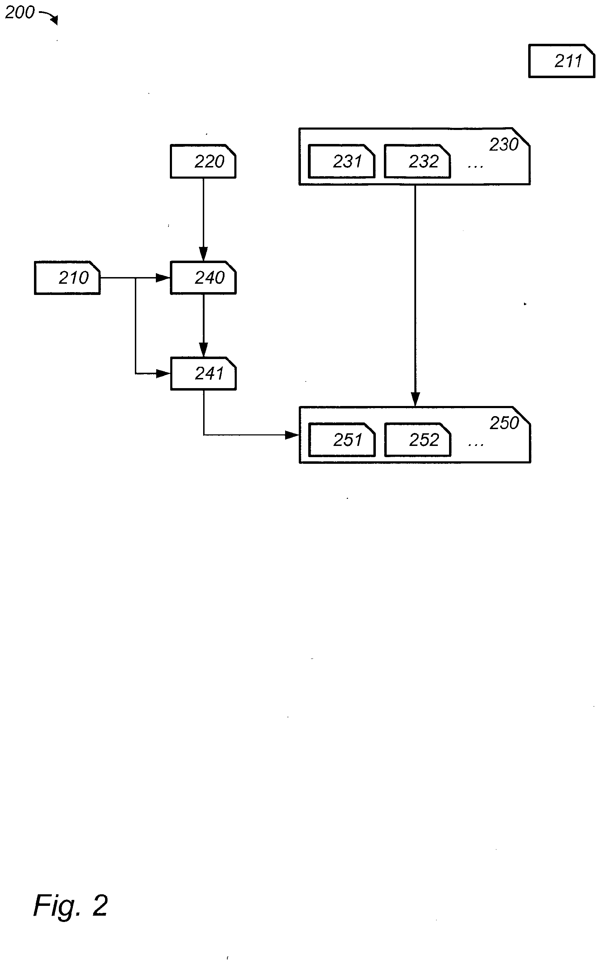

**Figure 2** schematically shows an example of an embodiment of a device 200 for an approximate gadget decomposition of an integer.

Shown in figure 2 is an input integer $a$, 210. The input integer is modulo a modulus $Q$, 211. By choosing the modulus $Q$ sufficiently large, non-modulo computation can be performed as well. For example, if two integers $x$ and $y$ are smaller than the square root of $Q$, their product may be computed modulo $Q$ while still giving the result of the multiplication; or an approximation thereof in case an approximate gadget decomposition according to an embodiment is use. It is not necessary to have the modulus $Q$ explicitly.

To reduce integer 210, modulus $Q$ is split into two smaller moduli: a first modulus $Q_L$, 220 and a second modulus $Q_H$, 230. The modulus $Q$, 211 is a product of the first modulus $Q_L$ and the second modulus $Q_H$. The first and second moduli are relatively prime and larger than 1. It is not necessary to have the second modulus explicitly.

At least for the second modulus $Q_H$, a second sequence of integers is obtained. Two integers of the second sequence are indicated with reference numbers 231, and 232. There may be more than two integers in the second sequence, e.g., at least 3, at least 4, etc. The product of the integers of the second sequence equals the second modulus $Q_H$. The integers of the second sequence are pairwise co-prime, and the integers are larger than 1. These integers could be taken as prime numbers, but it is important to note that there is no necessity to do so; in fact, often most or even all are composite. An advantage of using composite numbers is that integers can be chosen that are closer to a bound, e.g., imposed by the underlying machine, e.g., a word size.

The approximate gadget decomposition 250 may be computed by computing a representative difference modulo each of the integers in the second sequence corresponding to the second modulus $Q_H$. The difference $(a - a_L)$, 241 is between the input integer $a$ and an integer 240 congruent to the input integer $(a)$ modulo the first modulus $(Q_L)$, $(a_L \equiv a \bmod Q_L)$.

For example, one way to implement this is to first compute the difference $(a - a_L)$, say in the integers, or modulo $Q$, e.g., in the form of a representative modulo Q, and then compute the exact CRT gadget decomposition for the differences. Figure 2 shows the elements of the approximate gadget decomposition at 250, of which elements 251, and 252 are shown. For example, element 251 corresponds to modulus 231 and elements 252 to modulus 232.

For example, the following may be used. Given input integer a, compute $a_L = a \bmod Q_L$, wherein the modulo operation selects a representative from a suitable. This set is preferably centered around zero; it could also be the integers from 0 upto $Q_L$. Any other set of representatives would also work, though the approximation may be worse. Next compute $a - a_L$. This computation could be in the integers of mod Q. Finaly, exact CRT gadget decomposition may be used. That is, compute a representative for the difference for each modulus in the sequence for $Q_H$.

Various variants may be used. For example, one may compute $a_H = a \bmod Q_H$, and compute the CRT decomposition over the difference $a_H - a_L$, this will give the same result as $a \equiv a_H$ for each integer in the sequence for $Q_H$, but it will allow the difference to be smaller, which is beneficial in each of the following reductions in the CRT decomposition.

It is noted that alternative embodiments can be obtained by multiplying the difference with a fixed number which is relatively prime to $Q_{high}$. The multiplication can be compensated for in the gadget vector. A particular choice for such a multiplication is to take $Q_{low}$ for this, as it would remove a multiplication from the gadget definition.

Yet another alternative is to compute an exact CRT decomposition for $a$ or $a_H$, an exact CRT decomposition for $a_L$, and subtract the two vectors. This approach has the advantage of working only with small moduli.

An embodiment may be applied to any object, e.g., mathematical object, data structure, etc., in which integers need computation. In particular, polynomials and lists of polynomials may advantageously be converted to approximate CRT decomposition by applying an embodiment to each of their coefficients. For example, a converted polynomial may be stored internally as a list of lists, in which the former list represents the coefficients and the latter the approximate CRT coefficients.

Approximate CRT representation may be used with various coefficients, e.g., as in the examples below.

In an embodiment, an exponent t is defined such that the first modulus $Q_L$ and the second modulus $Q_H$ are both smaller than two to the power of the exponent $2^t$, and both larger than two to the power of the exponent minus one $2^{t-1}$. This has the effect of keeping the two moduli close together in value. Furthermore, if t represents a bound within which integers can be efficiently represented, this is also more efficient while using a large part of the available storage space. For example, the exponent may be at least 8, at least 16. For example, the exponent may be 17, 32, or 64.

It may be preferred to have the first and second modulus close together, for example, a quotient of the larger of the first and second modulus by the smaller of the first and second modulus is between 1 and 2, e.g., between 1 and 1.1.

It should be noted however that this is not necessary. The size of the first modulus may be used to control the accuracy of the approximation. A smaller first modulus and thus larger second modulus is more accurate, albeit at a large space and compute cost.

In an embodiment, the first and second modulus are both smaller than a machine word size, but the modulus Q) is larger than the machine word size.

In an embodiment, the numbers in the second sequence are each smaller than a machine word size. In an embodiment, the numbers in the first and second sequence are each smaller than a machine word size. For example, in an embodiment, $Q_L$ is less than $Q_H$, e.g., at most half $Q_H$.

The word size is the number of different values that can be stored in one machine word. If the machine has machine word bit size $t$, we can store $t$-bit values. These may be values from 0 to $2^t - 1$ or, what is typically done for signed integers between $-2^{t-1}$ and $2^{t-1} - 1$. In particular, for 8-bit primes, the largest prime we can support is 251, either by considering that the bits represent values from 0 to 250, or between -125 and 125.

We detail here the approximate CRT-Based gadget decomposition in the case of algebraic integers $a \in \mathcal{R}_Q$, typically viewed as polynomials with integer coefficients modulo Q. Nevertheless, all the definitions and properties are also valid for integers $a \in \mathbb{Z}/Q\mathbb{Z}$, or more generally for any $\mathbb{Z}/Q\mathbb{Z}\text{-module}$, as e.g., $\mathcal{R}_Q$-modules of rank $k$ viewed as vectors of polynomials $a = (a_1, ..., a_k) \in \mathcal{R}_Q^k$.

In a preferred embodiment, let $Q = Q_{high} \cdot Q_{low}$ with $\gcd(Q_{high}, Q_{low}) = 1$, where the high part (resp. the low part)

$Q_{high} = \prod_{j=1}^{\ell} q_j$ (resp. $Q_{low} = \prod_{j=1}^{k} q'_j$) is a product of $\ell$ (resp. $k$) pairwise co-prime integers $q_1, ..., q_\ell$ (resp. $q'_1, ..., q'_k$).

The definition of the gadget vector for approximate CRT decomposition may be defined in terms of the gadget vector for exact CRT reconstruction, but omitting the coefficients corresponding to divisors of $Q_{low}$, e.g.,

$$\mathbf{w} = (w_1, \ldots, w_\ell) \in \mathcal{R}_Q^\ell,$$

where $w_j = Q_{low} \tilde{Q}_j \cdot \left( (Q_{low} \tilde{Q}_j)^{-1} \bmod q_j \right)_{\mathbb{Z}}$ and

$$\tilde{Q}_j = \frac{Q_{high}}{q_j}. \quad (1)$$

The approximate CRT-based gadget decomposition of a polynomial

$$\mathbb{f} =$$

$\sum_{i=0}^{N-1} f_i x^i \in \mathcal{R}_q$ is then given by the $\ell$-tuple

$$\nabla_{\mathbf{w}} \mathbb{f} = (\mathbb{f}_1, \ldots, \mathbb{f}_\ell) \in \mathcal{R}^\ell$$

where, for $1 \leq j \leq \ell$,

$$\sum_{i=0}^{N-1} f_{ij} x^i$$

for $f_{ij} \in \mathbb{Z}/q_j\mathbb{Z}$ defined by the congruence

$$f_{ij} \equiv f_i - \sum_{u=1}^{k} \frac{Q_{low}}{q'_u} \cdot \left( \left( \frac{Q_{low}}{q'_u} \right)^{-1} \cdot f_i \bmod q'_u \right)_{\mathbb{Z}} \bmod q_j. \quad (2)$$

Recall that the $f_{ij}$'s are typically represented as integers in $[-\lfloor \frac{q_j}{2} \rfloor, \lfloor \frac{q_j}{2} \rfloor]$, and their computation indeed happens modulo $q_j$. Any other representation is also possible, in that case the bounds given below for quality $\beta$ and precision $\varepsilon$ might be slightly worse.

The above inner sum, indexed by $u$ in equation (2), has no dependency in $j$. Hence, for all divisors $q'_u$ of $Q_{low}$, the part modulo $q'_u$ of each term can be computed beforehand by units working modulo $q'_u$. Then, these are disclosed at once to the units working modulo the $q_j$'s, where their inner product with the precomputed twisting vectors $(\frac{Q_{low}}{q'_1}, \ldots, \frac{Q_{low}}{q'_k}) \bmod q_j$ is done directly modulo $q_j$.

The gadget vector $\mathbf{w}$ and associated decomposition algorithm $\nabla_{\mathbf{w}}$, as described above, define a level-$\ell$ gadget decomposition on $\mathcal{R}_q$ of quality $\beta$ and precision $\varepsilon$ given by the following bounds, for all

$$\mathbb{f} \in \mathcal{R}_q:$$

$$\|\nabla_{\mathbf{w}} \mathbb{f}\|_\infty \leq \beta = \max_{1 \leq i \leq \ell} \lfloor \frac{q_i}{2} \rfloor,$$

$$\|\mathit{f} - \langle \nabla_{\mathbf{w}}\mathit{f}, \mathbf{w}\rangle\|_{\infty} \leq \varepsilon = k \cdot \lfloor \frac{Q_{\text{low}}}{2} \rfloor \ ,$$

where the infinity norms are understood coefficient-wise.

Below an example is given. Suppose $\beta = 256$ and modulus $q$ is a 32-bit integer, which is divided in $q'_1 = 233$, $q'_2 = 239$ for the low part ($Q_{\text{low}} = 55687$) and $q_1 = 241$, $q_2 = 251$ for the high part ($Q_{\text{high}} = 60491$); hence $Q = 3368562317$ and $\ell = 2$. The corresponding gadget vector is

$$\mathbf{w} = (1663315003, 952860257) \in \mathcal{R}_Q^2.$$

In equation (2), we have that $\left( (\frac{Q_{\text{low}}}{q'_u}) \bmod q'_u \right)_{\mathbb{Z}}$ is 39 for $u = 1$ (resp. -40 for $u = 2$). If the input polynomial $\mathit{f}$ is

$$\mathit{f} = 1618033988 \, x^3 + 749894848 \, x^2 - 1322693974 \, x$$
$$+656381177 \ ,$$

then

$$\nabla_{\mathbf{w}}\mathit{f} = (\mathit{f}_1, \mathit{f}_2) \in \mathcal{R}^2$$

with

$$\begin{cases} \mathit{f}_1 & = \begin{aligned}[t] (\mathit{f} \bmod 241) \quad &+2 \cdot (39\mathit{f} \bmod 233)_{\mathbb{Z}} \\ &+8 \cdot (-40\mathit{f} \bmod 239)_{\mathbb{Z}} \bmod 241 \end{aligned} \\ & = 7\,x^3 + 2\,x^2 + 9\,x - 111 \ , \\ \mathit{f}_2 & = \begin{aligned}[t] (\mathit{f} \bmod 251) \quad &+12 \cdot (39\mathit{f} \bmod 233)_{\mathbb{Z}} \\ &+18 \cdot (-40\mathit{f} \bmod 239)_{\mathbb{Z}} \bmod 251 \end{aligned} \\ & = 92\,x^3 + 68\,x^2 + 43\,x + 99. \end{cases}$$

The corresponding approximate polynomial

$$\tilde{\mathit{f}} := \langle \nabla_{\mathbf{w}}\mathit{f}, \mathbf{w}\rangle$$

is equal to $\tilde{\mathit{f}}$ = 1618041472 $x^3$ + 749881142 $x^2$ - 1322733311 x + 656382669, whose distance from If in infinity-norm (coefficients-wise) is

$$\|\mathit{f} - \tilde{\mathit{f}}\|_{\infty} = \|-7484\,x^3 + 13706\,x^2 + 39337\,x - 1492\|_{\infty}$$
$$= 39337 \leq 2 \cdot \lfloor \frac{55687}{2} \rfloor = 55686.$$

In a preferred embodiment, we have $k = 1$ (then $Q_{low} = q'_1$). This is of particular interest, since then equation (2) writes as simply as

$$f_{ij} \equiv f_i - (f_i \bmod Q_{\mathrm{low}})_{\mathbb{Z}} \bmod q_j. \quad (3)$$

This yields a gadget decomposition of the same quality achieving precision $\varepsilon = \lfloor \frac{Q_{\mathrm{low}}}{2} \rfloor$. Note that in this particular case, no additional operation is needed by the arithmetic unit working modulo $q_j$ apart from receiving ($f_i$ mod $Q_{\mathrm{low}}$).

Suppose $\beta = 32$ and $\ell = 3$. Select for example $q_1 = 23$, $q_2 = 29$, $q_3 = 31$, and $Q_{\mathrm{low}} = 2^{16} + 1$ (and thus Q = 1355108549). The corresponding gadget vector is

$$\mathbf{w} = (-471342104, -186911524, 480844969) \in \mathcal{R}_Q^3.$$

If input polynomial $f$ is

$$f = 314159265\, x^3 + 358979323\, x^2 - 508844211\, x + 327950288 ,$$

then

$$\nabla_{\mathbf{w}} f = (f_1, f_2, f_3) \in \mathcal{R}^3$$

with

$$\begin{cases} f_1 = 8\, x^3 - 6\, x^2 + 8\, x - 8 \\ f_2 = 2\, x^3 + 9\, x^2 + 5\, x + 10 \\ f_3 = -2\, x^3 + 4\, x^2 - 11\, x + 8 \end{cases} .$$

The corresponding approximate polynomial

$$\tilde{f} := \langle \nabla_{\mathbf{w}} f, \mathbf{w} \rangle$$

is equal to $\tilde{f}$ = 314184378 $x^3$ + 359011686 $x^2$ - 508829268 x + 327947148, whose distance from $f$ is

$$\left\| f - \tilde{f} \right\|_{\infty} = \left\| -25113\, x^3 - 32363\, x^2 - 14943\, x + 3140 \right\|_{\infty}$$

$$= 32363 \leq 32768.$$

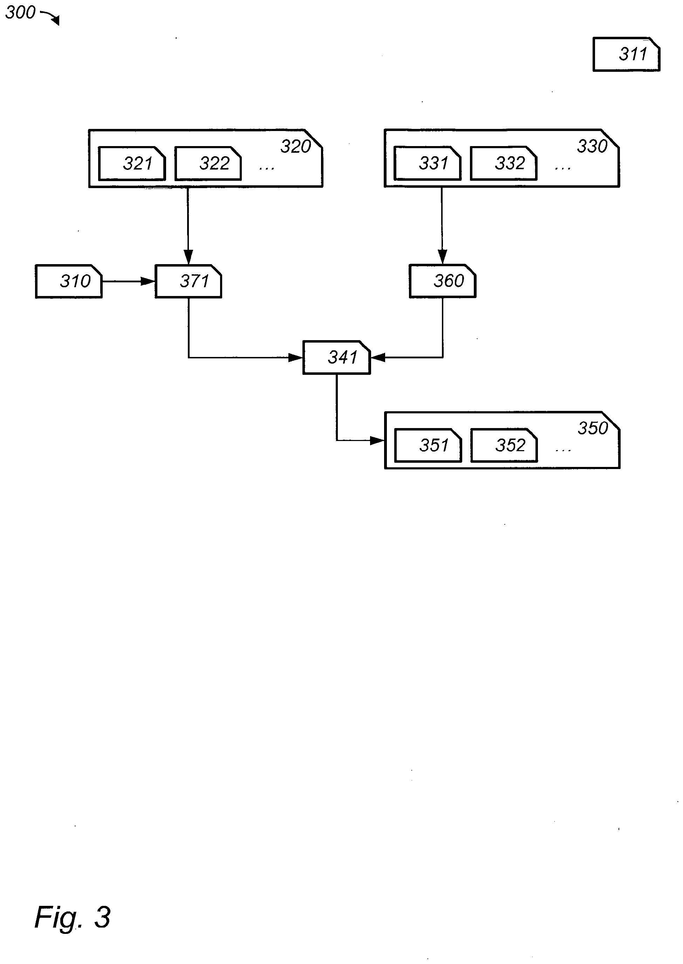

**Figure 3** schematically shows an example of an embodiment of a device 300 for an approximate gadget decomposition of an integer. A device according to Figure 3 is similar to figure 2, e.g., as both can use similar means to obtain an input integer, transmit or otherwise use output numbers, e.g., decompositions, etc. Furthermore, both compute a representative for the difference modulo each of the integers in the second sequence. However, the way in which the representatives are computed differs. Whereas in figure 2 some form of the difference is first computed, and then further computed upon to obtain the approximate CRT decomposition, in figure 3 this does not happen. As a result, most or all of the computation can be done over small moduli which increases parallelization, speed, and hardware requirements. Note however, that the error in the approximation can be slightly higher in embodiments according to figure 3 than those in which the difference is computed first.

As in figure 2, device 300 obtains an input integer 310, *a*. Furthermore, a modulus *Q*, 311, a first modulus 320, $Q_L$

and a second modulus 330, $Q_H$ are defined. For each of the two moduli a sequence of integers is provided. It is not necessary to have any of the modulus $Q$, 311, a first modulus 320, $Q_L$ and a second modulus 330, $Q_H$ available explicitly.

For the second modulus we have a sequence with integers 331-332, similar as in figure 2. The second sequence of integers for the second modulus $Q_H$, wherein the second sequence has at least two integers, the product of the integers of the second sequence equals the second modulus $Q_H$, the integers of the second sequence being pairwise co-prime, and the integers are larger than 1.

For the first modulus we have a sequence with integers 321-322, similar to the second sequence. The first sequence of integers for the first modulus $Q_L$, wherein the first sequence has at least one integer, the product of the integers of the first sequence equals the first modulus $Q_L$, the first sequence of integers are pairwise co-prime, and the integers are larger than 1. The second sequence may have more than 2 integers, e.g., at least 3, etc.

Note that we allow the first sequence to have only one integer. In this case, the product of the sequence is understood to be the one integer. In this case, the sequence of integers equals the first modulus $Q_L$. This special case can be advantageous, as pointed out herein. The first sequence may have more than one integer, e.g., at least 2, at least 3, etc.

Computing the approximate gadget decomposition may use equation (2) mentioned above.

For each of the integers in the second sequence, e.g., integers 331, 332, an integer is computed equal to the input integer 310, *a* modulo the integer. For example, a representative from a set of representatives may be selected. Accordingly, the input integer is reduced modulo each number in the second series. Only one integer 360 is shown in figure 3, but one will be computed for each integer in sequence 330.

From the reduced input integer 360 an integer is subtracted that is congruent an integer (240) congruent to the input integer (*a*) modulo the first modulus ($Q_L$), ($a_L, \equiv a$ mod $Q_L$). This computation is done modulo the same integer of the second sequence as for which integer 360 was computed.

The integer $a_L$ is from integer 360 in parts, one part for each integer in the first sequence. For each first specific integer ($q'_u$) in the first sequence the product 371 is computed modulo the second specific integer ($q_j$) of

-     the first modulus ($Q_L$) divided by the first specific integer ($q'_u$),
-     the input integer (*a*) multiplied with the inverse of the first modulus ($Q_L$) divided by the first specific integer ($q'_u$) modulo the first specific integer ($q'_u$) (($Q_L/q'_u$)$^{-1}$ mod $q'_u$).

The result of the subtractions is integer 341 which is then included in the decomposition 350. Shown are integers 351 and 352 corresponding to moduli 331 and 332.

The product may be computed modulo the same integer in the second sequence that was also used to compute integer 360. Note only one integer 371 is shown, a sequence will be computed for each integer in the first sequence 321-322. One such sequence will be computed for each integer in the second series.

The result is the subtraction is an element of the approximate gadget decomposition element for the particular integer in the second series.

In an embodiment, this algorithm is implemented using a synchronized parallel framework for operations, where the synchronization steps comprise exchanging values across the parallel arithmetic units. The approximate CRT-based gadget decomposition allows avoiding performing large operands arithmetic, which results in a simplified workflow, smaller circuit design and improved performances, with no impact on the keys size compared to the approximate radix-B gadget decomposition introduced in [8].

The following pseudocode may be used to compute the approximate gadget decomposition.

```
Input: integersLow, integersHigh, a
QLow := product of integersLow
decomposition :=[]
for qH in integersHigh:
    s := a mod qH
    for qL in integersLow:
        Qprime := QLow//qL #can be precomputed
        Qprimei := Qprime^-1 mod qL #can be precomputed
        #Qprime = Qprime mod qH #can be precomputed (optional)
        t := (Qprimei*a) mod qL # can be precomputed
        s := (s - (Qprime * t)) mod qH
    decomposition.append(s)
    return decomposition
```

Note that, as indicated in the pseudocode some of the operations can be precomputed. Note also that some optional modulo reductions can be inserted to help keeping numbers small. They are fully optional.

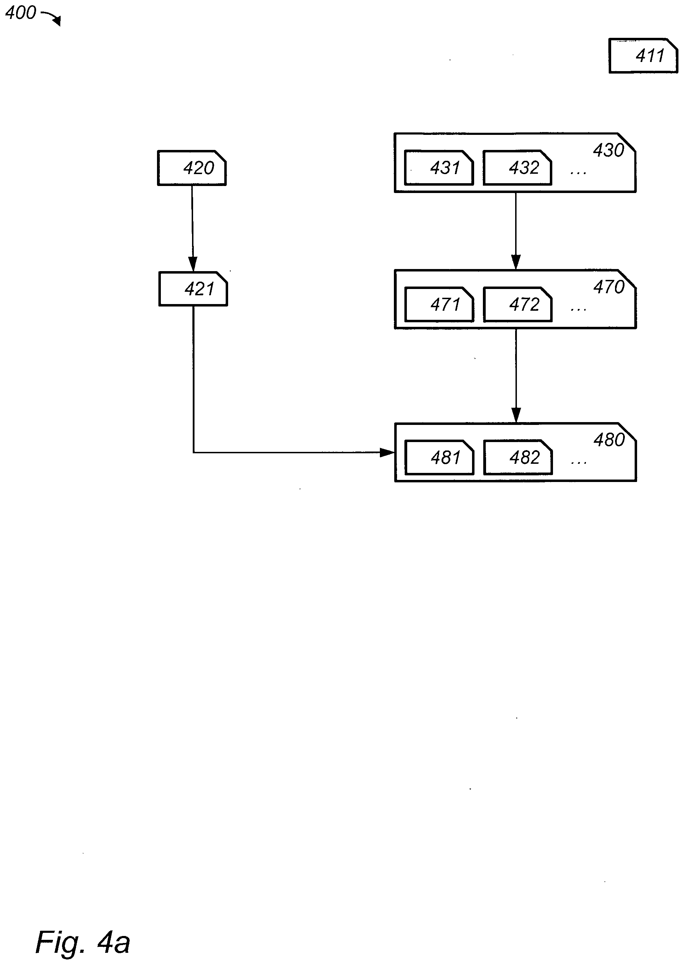

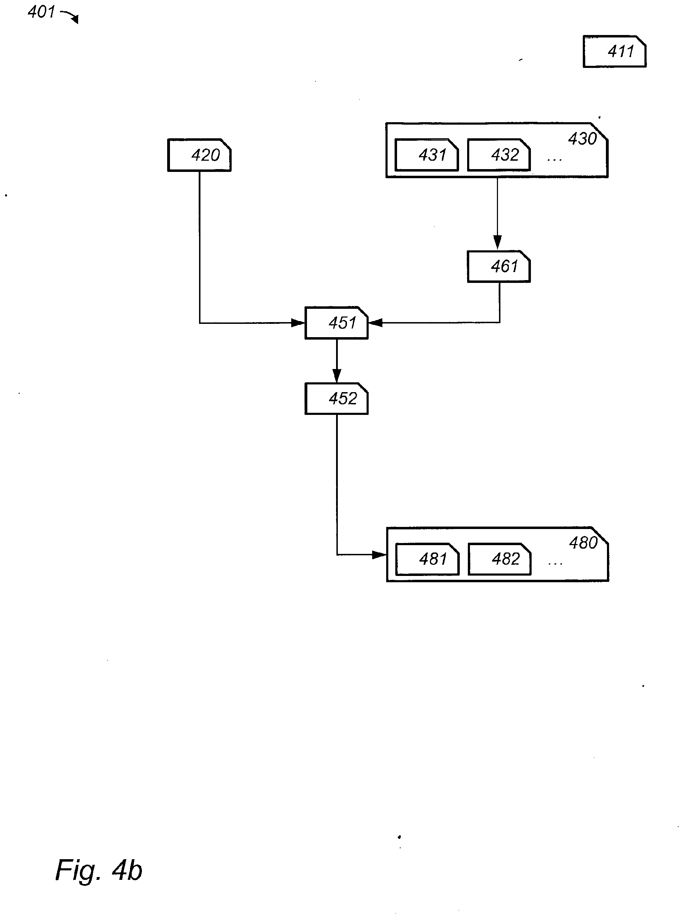

**Figure 4a** schematically shows an example of an embodiment of a device 400 for computing a gadget vector. The construction of figure 4a reuses the exact gadget vector for the exact CRT gadget decomposition. Figure 4b below details an alternative way to compute the gadget vector which is better, because it results in smaller integers.

The gadget vector can be used to reconstruct the integer corresponding to an approximate gadget decomposition. After decomposing an integer and reconstructing using the gadget vector, an approximation of the original integer is still obtained. Note, this is not true for a conventional CRT gadget decomposition. If any of the coefficients in a conventional CRT gadget decomposition is lost, the reconstructed integer may be completely different from the original integer. A gadget vector computed using an embodiment according to figure 4a, may, e.g., be used with a decomposition according to figure 2 or figure 3.

As with the decomposition, such as for example in figures 2 and 3, a modulus $Q$, 411, a first modulus $Q_L$, 420, and a second modulus $Q_H$, 430 are defined. It may be convenient to have modulus $Q$ explicitly in a device, such as a device according to figure 4a, but it is not necessary. For second modulus $Q_H$, 430, a second sequence of integers 431-432 is obtained. Since a sequence is available for the second modulus $Q_H$ is not necessary to have second modulus $Q_H$, 430 itself explicitly available.

The second sequence has at least two integers. The product of the second sequence equals the second modulus $Q_H$, the second sequence of integers are pairwise co-prime, and the integers are larger than 1.

To compute a gadget vector for approximate gadget decompositions relative to the second sequence and the first modulus. First the CRT gadget vector 470 may be computed, as it would be for an exact CRT decomposition relative only to the second sequence. Two integers of gadget vector 470 are labelled 471 and 472 corresponding to moduli 431, and 432, respectively. Formulas therefor are contained herein, and are also given in the pseudo code below.

A gadget vector 480 for the approximate gadget decomposition is obtained by multiplying each of its elements with an integer 421. Two integers of gadget vector 480 are labelled 481 and 482 corresponding to moduli 431, and 432, respectively. The integer 421 may be computed as the product of the first modulus $Q_L$ and a modular inverse of the first modulus modulo the second modulus $Q_L^{-1} \bmod Q_H$.

**Figure 4b** schematically shows an example of an embodiment of a device 401 for computing a gadget vector. Shown in figure 4b is the modulus $Q$, 411, a first modulus $Q_L$, 420, and a second modulus $Q_H$, 430. For the second modulus a second sequence of integers is available. Shown are integers 431 and 432 in the second sequence.

For each value $q_j$ in the second sequence a corresponding value in the gadget vector is computed. To compute the gadget vector element corresponding to element $q_j$, the following numbers are computed

An integer 461 which is the second modulus $Q_H$ divided by the integer $q_j$, denoted by $\tilde{Q}_j = \dfrac{Q_H}{q_j}$. This integer could also be computed by multiplying all integers in the second sequence except for integer $q_j$. Integer 461, $\tilde{Q}_j$ is multiplied with first modulus $Q_L$, 420 to obtain integer 451. The inverse of integer 451 modulo the integer $q_j$ is shown at 452. Finally, the product of integers 451 and 452 is recorded as the element of the gadget vector 480. That is the element $w_j$ of the gadget vector is computed as: $w_j = Q_L \tilde{Q}_j \cdot \left( (Q_L \tilde{Q}_j)^{-1} \bmod q_j \right)_{\mathbb{Z}}$.

In a preferred embodiment, these preferred embodiments are subject to variants. One possible alternative is to include the multiplicative factor $Q_{low}^{-1}$ modulo $q_j$ (resp. $\tilde{Q}_j^{-1}$, $(Q_{low}\tilde{Q}_j)^{-1}$) directly in the definition of $f_{ij}$ and to adapt the definition of $w_j$ accordingly. More precisely, for example the gadget vector could be defined as w' = ($w'_1$, ..., $w'_\ell$) where

$$w'_j = Q_{\text{low}} \tilde{Q}_j \cdot \left( \tilde{Q}_j^{-1} \bmod q_j \right)_{\mathbb{Z}},$$

and

$$\nabla_{\mathbf{w'}} f = (f'_1, \ldots, f'_\ell)$$

where, for $1 \leq j \leq$ -P,

$$f'_j = \sum_{i=0}^{N-1} f'_{ij} x^i$$

whose coefficients $f'_{ij}$ viewed as small integers satisfy the congruence

$$f'_{ij} \equiv Q_{low}^{-1} \cdot f_{ij} \bmod q_j,$$

where $f_{ij}$ is defined in equation (2).

Element 452 is optional and may be omitted. Element 452 may be replaced with other values. For example, the gadget vector may be computed by any of the formulas below

$$w_j = Q_{\mathrm{L}} \tilde{Q}_j \cdot \left( (Q_{\mathrm{L}} \tilde{Q}_j)^{-1} \bmod q_j \right)_{\mathbb{Z}}$$

$$w_j = Q_{\mathrm{L}} \tilde{Q}_j \cdot \left( (\tilde{Q}_j)^{-1} \bmod q_j \right)_{\mathbb{Z}}$$

$$w_j = Q_{\mathrm{L}} \tilde{Q}_j \cdot \left( (Q_{\mathrm{L}})^{-1} \bmod q_j \right)_{\mathbb{Z}}$$

$$w_j = Q_{\mathrm{L}} \tilde{Q}_j$$

A corresponding factor may be added to the decomposition computation.

For example, these algorithms may be used as follows. One or more integers may be transformed into their approximate gadget decomposition, e.g., using an embodiment such as those of figures 2 or 3. Operations may be performed component wise on the decomposed numbers, e.g., they may be added, multiplied, etc. An operation result may be transformed back to the integers, e.g., the integers module $Q$, by computer the dot product of the gadget representation and the gadget vector.

The approximate gadget decomposition is not exact. After decomposing and reconstructing there may be an error. The size of the error depends on the size of the first modulus-a smaller first modulus allows smaller errors—and on the exact choices made in implementing the algorithms. For example, implementing the modulo operations so that they map to a set of representatives centered around zero leads to smaller errors. An algorithm according to figure 3 may lead to larger errors, though with the advantage that computations can be performed modulo smaller moduli.

For example, in an embodiment, using centered representatives and an embodiment according to figure 2 an error between the reconstructed approximation and the original integer is at most half the first modulus ($Q_L$). Using non-negative representatives smaller than the modulus doubles the possible error. Using an implementation according to figure 3 may multiply the error by a factor equal to the number of integers in the first sequence, though in practice this error is typically smaller.

In an embodiment, the approximate gadget decomposition is used in fully homomorphic encrypted multiplication. In an embodiment, the FHE scheme is lattice based, as many FHE schemes are, e.g., basing their security on the learning with errors problem or variants thereof. In the FHE scheme ciphertexts are noisy. The problem is that the noise present in the ciphertexts tends to grow when noisy ciphertexts are homomorphically processed. If the noise grows above a certain threshold, ciphertexts can no longer be decrypted. There are basically two ways to address this problem: *(i)* bootstrapping ciphertexts and *(ii)* controlling the noise growth in ciphertexts. The approach of *bootstrapping* was introduced in Gentry's seminal work in 2009. It comprises homomorphically evaluating the decryption circuit on input an encryption of a ciphertext and of the decryption key, yielding another ciphertext that encrypts the same plaintext-this is also known as recryption. Since the decryption removes noise, the noise in a bootstrapped ciphertext is reset to a nominal level; the output ciphertext only contains the noise resulting from the bootstrapping process. A complementary approach for dealing with the noise is to ensure that the noise does not grow too quickly so that a larger number of homomorphic operations can be performed before the need of bootstrapping. One approach to do so, is to use a gadget decomposition.

For example, let Enc denote a homomorphic encryption scheme. Suppose we need to evaluate $c \leftarrow k \cdot \mathrm{Enc}(x)$ for some scalar $k$ and ciphertext $\mathrm{Enc}(x)$. Instead of computing $c \leftarrow k \cdot \mathrm{Enc}(x)$ directly, which would affect the noise by a factor proportional to $k$, let $(k_1, ..., k_l)$ by the approximate gadget decomposition of the k according to an embodiment with respect to a second sequence of integers $(q_1, ..., q_l)$ for a second modulus ($Q_H$). Let the corresponding gadget vector be $(w_1, ..., w_l)$. Obtain ciphertexts $\mathrm{Enc}(w_i x)$ for all $1 \leq i \leq l$, that represent integer $x$ in encrypted approximated gadget format. We can represent ciphertext $c$, that is the encryption of $kx$ as a sequence of values $k_i \mathrm{Enc}(w_i x) = \mathrm{Enc}(c)$. Observe that

$$\sum_{i=1}^{l} k_i \cdot \mathrm{Enc}(w_i\, x) = \mathrm{Enc}(c).$$

This second approach is more advantageous regarding noise propagation as the noise in ciphertexts is now multiplied by smaller values--observe that $|k_i| \ll |k|$. One way to obtain the initial ciphertexts $\text{Enc}(w_jx)$, is to receive them from the client. For example, a client having input data x, may encrypt the input data to obtain $\text{Enc}(w_jx)$ for all it, and send all these values the computation server. At the computation server the FHE computations are performed, say, a neural network is evaluated on input x, a neural network is trained for training data x, etc. Note that if needed, an integer represented as a sequence $\text{Enc}(w_jx)$, can be converted to $\text{Enc}(x)$ homomorphically if needed.

Once a gadget decomposition $\nabla := \nabla_{\mathbf{g}}^{\beta,\varepsilon}$ has been fixed for a certain gadget vector $\mathbf{g} = (g_1, \ldots, g_\ell) \in \mathcal{R}_q^\ell$, it induces an associated *leveled* encryption of a message

$$m \in \mathcal{R},$$

as

$$\mathbf{GLev}_s^{\mathbf{g}}(m) = (\mathbf{GLWE}_s(g_j \cdot m))_{1 \leq j \leq \ell},$$

and its GGSW expansion

$$\mathbf{GGSW}_s(m) = (\mathbf{GLev}_s^{\mathbf{g}}(-s_1 \cdot m), \ldots, \mathbf{GLev}_s^{\mathbf{g}}(-s_k \cdot m), \mathbf{GLev}_s^{\mathbf{g}}(m)).$$

This allows defining certain homomorphic operations. These operations do not depend, formula-wise, on the particular gadget decomposition. Only their noise analysis may differ, depending on $\ell$, $\beta$, $\varepsilon$ and on the distribution of $\nabla_{(\cdot)}$.

**Scalar product**. The gadget decomposition gives rise to the definition of a scalar product:

$$\odot : \mathcal{R}_q \times \mathcal{R}_q^\ell \to \mathcal{R}_q, (f, h) \mapsto f \odot h := \langle \nabla_{\mathbf{g}} f, h \rangle.$$

In particular, if the polynomial vector $h$ is the gadget vector, we have

$$f \odot \mathbf{g} \approx f.$$

Typically, this is extended to compute the product of a known element

$$\alpha \in \mathcal{R}_q$$

with an encryption of a message m to get an encryption of $\alpha \cdot m$. Letting $\nabla_\alpha = (\alpha_1, \ldots, \alpha_\ell)$, it can be seen that

$$\alpha \odot \mathbf{GLev}_s^{\mathbf{g}}(m) := \langle \nabla\alpha, \mathbf{GLev}_s^{\mathbf{g}}(m) \rangle$$
$$= \sum_{j=1}^{\ell} \alpha_j \cdot \mathbf{GLWE}_s(g_j \cdot m) = \mathbf{GLWE}_s((\sum_{j=1}^{\ell} \alpha_j \cdot g_j) \cdot m)$$
$$= \mathbf{GLWE}_s(\langle \nabla_{\mathbf{g}}\alpha, \mathbf{g} \rangle \cdot m) = \mathbf{GLWE}_s((\alpha \odot \mathbf{g}) \cdot m)$$
$$= \mathbf{GLWE}_s(\alpha \cdot m).$$

In this way one gets

$$\mathbf{GLev}_{s}^{\mathbf{g}}(\alpha \cdot m)$$

as an output by evaluating $((\alpha \cdot g_j) \odot$

$$\mathbf{GLev}_{s}^{\mathbf{g}}(m))_{1 \le j \le \ell}.$$

.

**External product**

The external product allows computing the GLWE encryption of the product of two encrypted messages, as

$$\mathbf{GLWE}_{s}(\mu_1) \circledast \mathbf{GGSW}_{s}(m_2) := (\sum_{j=1}^{k} a_j \odot \mathbf{GLev}_{s}^{\mathbf{g}}(-s_j \cdot m_2)) + b \odot \mathbf{GLev}_{s}^{\mathbf{g}}(m_2)$$

$$= (\sum_{j=1}^{k} \langle \nabla_{a_j}, \mathbf{GLev}_{s}^{\mathbf{g}}(-s_j \cdot m_2) \rangle) + \langle \nabla_{b}, \mathbf{GLev}_{s}^{\mathbf{g}}(m_2) \rangle$$

$$= (\sum_{j=1}^{k} \mathbf{GLWE}_{s}(-a_j \cdot s_j \cdot m_2)) + \mathbf{GLWE}_{s}(b \cdot m_2)$$

$$= \mathbf{GLWE}_{s}((b - \sum_{j=1}^{k} a_j \cdot s_j) \cdot m_2)$$

$$= \mathbf{GLWE}_{s}(\mu_1 \cdot m_2 + e \cdot m_2)$$

where

$$(a_1, \dots, a_k, b = \sum_{j=1}^{k} a_j \cdot s_j + \mu_1 + e)$$

expands the input $\mathbf{GLWE}_{s}(\mu_1)$. The result is a GLWE encryption of $\mu_1 \cdot m_2$ if message $m_2$ is small so that

$$\|e \cdot m_2\|_{\infty} \approx \|e\|_{\infty}.$$

The external product is asymmetric in the sense that one of its operand is a GLWE ciphertext whereas the other is a GGSW ciphertext with $(k + 1)\ell$ components.

Embodiments as set out herein are useful in a variety of ways. As an example, some are discussed below. For example, we consider use-cases where a machine word is too small for accommodating the arithmetic on large operands. For instance, this may arise in the following two cases:

1. in the software case, when ciphertexts are given modulo an integer $Q$ that is larger than the machine word size, e.g., 64 or 32 bits;
2. in the hardware case, wherein multipliers have a restricted size, e.g., 17 bits; see e.g., [16].

In both cases, the above-mentioned operations involve multiplications of elements that comprise multiple machine words. This results additional computational cost, as well as an increased circuit size. Using an embodiment these costs can be reduced.

The approximate CRT-based gadget decomposition may be used to compute the homomorphic scalar product between a scalar and a ciphertext. For example, the ciphertext may be leveled associated to the gadget vector definition. Leveled encryption refers to an encryption where the input being encrypted is multiplied by the components of the gadget vector; see. e.g., Section 2 in [14] for the case of ring LWE encryption. The approximate gadget decomposition according to an embodiment may be used as the gadget decomposition building block for homomorphic operations and routines in FHE schemes, see, e.g., [5, 13, 4, 11, 1, 10, 7, 8, 3]. For instance, it allows defining an external product, as in [8, 12], between an encrypted value and a leveled ciphertext, which is a critical operation repeated many times during bootstrapping in certain FHE schemes, like e.g., TFHE, FINAL or FHEW. As an example, we detail the modus operandi for the Blind Rotation which is at the heart of the programmable bootstrapping; the same techniques apply readily for e.g., the Key Switch . We also present two concrete applications: for machine learning on encrypted data and in the context of blockchain applications for homomorphic threshold decryption.

**Blind rotation.** The gadget decomposition is a central operation used FHE schemes, e.g., in TFHE and the likes, e.g., for blind rotation. As such, the proposed methods apply to the blind rotation using the advantageous approximate decomposition.

**Homomorphic Machine Learning.** A critical operation for machine learning on encrypted data consists in computing homomorphically weighted sums of the form

$$\sum_{j=1}^{M} a_j \cdot C_j.$$

Each term of this sum involves a scalar product between a weight $a_j$ and a ciphertext $C_j$, involving as many gadget decompositions. Those operations are to be accelerated on dedicated, massively parallel, hardware such as GPUs, FPGAs, or ASICs.

These architectures might have quite small arithmetic units. For example, FPGAs typically contain multipliers ranging from 17 bits to 23 bits, depending on the model. On the other hand, GPUs may take advantage of performing vectorized operations on several 16 bits or 32 bits operands on parallel threads, e.g., as many as for a 2000 or more. An approximate CRT-based gadget decomposition allows taking full advantage of the computational characteristics of these hardwares. Moreover, using the approximate CRT-based gadget decomposition these multiplications and other operations are parallelizable.

**Threshold decryption for TFHE.** In the context of threshold decryption for FHE, and in particular for blockchain applications, one way to avoid leaking the shared secret key through the noise to the parties is to inject some additional noise into the secret shares, a technique which is called noise flooding. For TFHE, where the ciphertext modulus is usually relatively small (say, 64 bits or less) to enhance performance, this technique is not directly applicable as the noise gap is too small to preserve the message from being destroyed during the noise flooding operation. Therefore, a technique called Switch-n-Squash was proposed in [9], that embeds ciphertexts into larger parameters during a bootstrapping operation; thereafter the regular noise flooding operation can be safely applied.

As a consequence, costly bootstrapping operations, involving the Number Theoretic Transforms, or more generally polynomial multiplications, have to be computed on larger integers, e.g., 128 bits, as suggested in [9]. In practice, optimized code for these sizes is not readily available off the shelf and moving beyond the frontier of a single machine word incurs a noticeable computational overhead. Using the approximate CRT-based gadget decomposition makes it possible to reuse code that is optimized for 64-bit words for the extended ciphertext moduli featured in [9]. This can be done in parallel, with no additional overhead apart from the synchronization step computing the gadget decomposition.

**References**

[1] Jacob Alperin-Sheriff and Chris Peikert. Faster bootstrapping with polynomial error. In J. A. Garay and R. Gennaro, editors, Advances in Cryptology - CRYPTO 2014, Part I, volume 8616 of Lecture Notes in Computer Science, pages 297-314. Springer, 2014.

[2] Guillaume Bonnoron, Leo Ducas, and Max Fillinger. Large FHE gates from tensored homomorphic accumulator. In Progress in Cryptology - AFRICA CR YPT 2018, volume 10831 of Lecture Notes in Computer Science, pages 217-251. Springer, Cham, 2018.

[3] Charlotte Bonte, Ilia Iliashenko, Jeongeun Park, Hilder V. L. Pereira, and Nigel P. Smart. FINAL: Faster FHE instantiated with NTRU and LWE. In Advances in Cryptology -ASIACRYPT 2021, volume 13792 of Lecture Notes in Computer Science, pages 188-215. Springer, 2021.

[4] Zvika Brakerski, Craig Gentry, and Vinod Vaikuntanathan. (Leveled) fully homomorphic encryption without bootstrapping. ACM Transactions on Computation Theory, 6(3):13:1-13:36, 2014. Earlier version in ITCS 2012.

[5] Zvika Brakerski and Vinod Vaikuntanathan. Efficient fully homomorphic encryption from (standard) LWE. SLAM Journal on Computing, 43(2):831-871, 2014.

[6] Zvika Brakerski. Fully homomorphic encryption without modulus switching from classical GapSVP. In R. Safavi-Naini and R. Canetti, editors, Advances in Cryptology - CRYPTO 2012, volume 7417 of Lecture Notes in Computer Science, pages 868-886. Springer, 2012.

[7] Jung Hee Cheon, Andrey Kim, Miran Kim, and Yongsoo Song. Homomorphic encryption for arithmetic of approximate numbers. In T. Takagi and T. Peyrin, editors, Advances in Cryptology - ASIACRYPT 2017, volume 10624 of Lecture Notes in Computer Science, pages 409-437. Springer, 2017.

[8] Ilaria Chilotti, Nicolas Gama, Mariya Georgieva, and Malika Izabachene. TFHE: Fast fully homomorphic encryption over the torus. Journal of Cryptology, 33:34-91, 2020.

[9] Morten Dahl, Daniel Demmler, Sarah El Kazdady, Arthur Meyre, Jean-Baptiste Orfila, Dragor Rotaru, Nigel P. Smart, Samuel Tap, and Michael Walter. Noah's Ark: Efficient Threshold-FHE using noise flooding. In WAHC'23: Proceedings of the 11th Workshop on Encrypted Computing & Applized Homomorphic Cryptography, pages 35-46. ACM, New York, 2023.

[10] Léo Ducas and Daniele Micciancio. FHEW: Bootstrapping homomorphic encryption in less than a second. In E. Oswald and M. Fischlin, editors, Advances in Cryptology - EUROCRYPT 2015, Part I, volume 9056 of Lecture Notes in Computer Science, pages 617-640. Springer, 2015.

[11] Craig Gentry, Amit Sahai, and Brent Waters. Homomorphic encryption from learning with errors: Conceptually-simpler, asymptotically-faster, attribute-based. In R. Canetti and J. A. Garay, editors, Advances in Cryptology - CRYPTO 2013, Part I, volume 8042 of Lecture Notes in Computer Science, pages 75-92. Springer, 2013.

[12] Shai Halevi, Tzipora Halevi, Victor Shoup, and Noah Stephens-Davidowitz. Implementing BP-obfuscation using graph-induced encoding. In CCS '17: Proceedings of the 2017 ACM SIGSAC Conference on Computer and Communications Security, pages 783-798. ACM, 2017.

[13] Daniele Micciancio and Chris Peikert. Trapdoors for lattices: Simpler, tighter, faster, smaller. In Advances in Cryptology - EUROCRYPT 2012, volume 7237 of Lecture Notes in Computer Science, pages 700-718. Springer, Berlin, Heidelberg, 2012.

[14] Daniele Micciancio and Yuriy Polyakov. Bootstrapping in FHEW-like cryptosys- terns. In 9th Workshop on Encrypted Computing & Applied Homomorphic Cryptography (WAHC 2021), pages 17-28. ACM Press, 2021.

[15] Dingyi Pei, Arto Salomaa, and Cunsheng Ding. Chinese Remainder Theorem: Applications in Computing, Coding, Cryptography. World Scientific Publishing Company, 1996.

[16] Xilinx. UltraScale architecture DSP slice. User Guide, v1.11, August 2021.

Below several further optional refinements, details, and embodiments are illustrated.

Using the conventional CRT gadget decomposition, any

$$f \in \mathcal{R}_q$$

may be expressed *exactly* as

$$f = \langle \nabla_{\mathbf{z}} f, \mathbf{z} \rangle$$

. However, some applications only require an approximate expression $\tilde{f}$ for $f$ provided that $\tilde{f}$ satisfies

$$\left\| f - \tilde{f} \right\|_\infty \leq \varepsilon$$

for some given bound $\varepsilon$.

A typical example is when a ciphertext is gadget-decomposed. The lower part contains noise; a full gadget decomposition boils down at some point to uselessly decompose noise. We illustrate this in the case of LWE ciphertexts for simplicity but the same carries over e.g., RLWE ciphertexts or other types of ciphertexts. Consider an LWE-type ciphertext $C = (a = (a_1, \ldots, a_n), b = \langle a, s \rangle + \mu + e) \in (\mathbb{Z}/Q\mathbb{Z})^{n+1}$ where $\mu = \lfloor Q/t \rceil m$ encodes message $m \in \mathbb{Z}/t\mathbb{Z}$, $s \in \{0,1\}^n$ is the secret key, and noise $e \in \mathbb{Z}$ is sampled according to normal distribution $\mathcal{N}(0, \sigma^2)$. The phase and error functions of $C$ are respectively defined by $\varphi_s(C) = b - \langle a, s \rangle \bmod Q$ and $\mathrm{Err}(C) = (\varphi_s(C) - \mu)_{\mathbb{Z}}$.

Let $\tilde{C} := \langle \nabla_g C, g \rangle \bmod q = (\tilde{a}, \tilde{b})$. Noting that

$$\varphi_s(\widetilde{C}) \equiv \varphi_s(\widetilde{C} - C) + \varphi_s(C) \equiv \tilde{b} - b - \langle \tilde{a} - a, s \rangle + \varphi_s(C)$$

$$\equiv \mathfrak{b} - \langle \mathfrak{a}, s \rangle + \varphi_s(C) \pmod{Q}$$

for some variables $\mathfrak{a} \in ([-\varepsilon, \varepsilon])^n$ and $\mathfrak{b} \in ([-\varepsilon, \varepsilon]$ and assuming that $\mathfrak{a}$ and $\mathfrak{b}$ are uniformly distributed, the variance of the noise error in the recomposed ciphertext $\tilde{C}$ verifies

$$\mathrm{Var}(\mathrm{Err}(\widetilde{C})) = \mathrm{Var}\left((\varphi_s(\widetilde{C} - \mu)_{\mathbb{Z}}\right) = \mathrm{Var}(\mathfrak{b} - \langle \mathfrak{a}, s \rangle) + \mathrm{Var}(\mathrm{Err}(C))$$

$$= \mathrm{Var}(\mathfrak{b}) + n(\mathrm{Var}(\mathfrak{a}_j)\mathrm{Var}(s_j) + \mathrm{Var}(\mathfrak{a}_j)\mathbb{E}[s_j]^2 + \mathrm{Var}(s_j)\mathbb{E}[\mathfrak{a}_j]^2) + \sigma^2$$

$$= \frac{1}{6}(n+2)\varepsilon(\varepsilon+1) + \sigma^2 \leq \frac{n+2}{3}\varepsilon^2 + \sigma^2$$

since
$$\mathrm{Var}(\mathfrak{b}) = \mathrm{Var}(\mathfrak{a}_j) = \frac{1}{12}((2\varepsilon+1)^2 - 1) = \frac{1}{3}\varepsilon(\varepsilon+1), \quad \mathrm{Var}(s_j) = \frac{1}{4},$$

$$\mathbb{E}[s_j] = \frac{1}{2}, \text{ and } \mathbb{E}[\mathfrak{a}_j] = 0.$$

As a result, if the bound $\varepsilon$ on the approximation error $\|\tilde{C} - C\|_\infty$ is for example set such that $\varepsilon \leq \sigma\sqrt{3/(n+2)}$ then $\mathrm{Var}(\mathrm{Err}(\tilde{C})) \leq 2\sigma^2$; i.e., the impact on the noise error is very low. Regarding the performance, however, the impact can be substantially positive.

**Application to the Blind Rotation.** The blind rotation is the costliest part of the (programmable) bootstrapping phase of TFHE-like schemes. Starting from a noisy LWE ciphertext, it consists in essence in applying iteratively an encrypted CMux operation on an accumulator with the help of so-called *bootstrapping keys*, that are concretely extended encryptions of the components of the initial LWE key.

Below, for illustration purposes, we specialize to the case where LWE keys are binary and to 2*N*-th cyclotomic rings of the form $\mathcal{R} \cong \mathbb{Z}[x]/\langle x^N + 1 \rangle$. As the gadget decomposition is a low-level primitive, our new approximate CRT-based gadget decomposition also applies to broader settings, as other key distributions, e.g., ternary, other rings $\mathcal{R}$, e.g., *m*-th cyclotomic rings where m is a prime or is of the form $2^a \cdot 3^b$, or $\mathcal{R}$-modules of rank greater than 1.

*GINX Blind Rotation.* Let *q* be the ciphertext modulus, let

$$\mathcal{R}_q = \mathcal{R}/Q\mathcal{R} \cong$$

$(\mathbb{Z}/Q\mathbb{Z})[x]/\langle x^N + 1 \rangle$ be the 2*N*-th cyclotomic ring modulo *Q* and let *t* be the plaintext modulus. The *Blind Rotation* starts from an LWE encryption of dimension *n* of an encoding of $\mu \in \mathbb{Z}/t\mathbb{Z}$, will do a uniformization later i.e., from

$$LWE_s(\lfloor\tfrac{2N}{t}\rceil \cdot \mu) = (\boldsymbol{a}, b = \langle \boldsymbol{a}, s \rangle + \lfloor\tfrac{2N}{t}\rceil \cdot \mu + e) \in (\mathbb{Z}/2N\mathbb{Z})^{n+1},$$

where the noise e follows a sufficiently large Gaussian distribution and the key s is supposed to be binary, i.e., $\boldsymbol{s} = (s_1, ..., s_n) \in \{0,1\}^n$. In particular, we consider that the *Modulus Switching* from *q* to 2*N* has previously been done.

*Bootstrapping keys.* Suppose a gadget decomposition $\nabla := \nabla_g$ of level *l* has been fixed relatively to a gadget vector

$$\mathbf{g} = (g_1, \ldots, g_l) \in \mathcal{R}_Q^l.$$

. The encrypted CMux operations are enabled by RGSW encryptions associated to **g** of the bits of **s** under a key $s \in \mathcal{R}_Q$. More precisely, the *bootstrapping keys* associated to **g** are hence defined, for i E [1, n], by

$$\text{bsk}[i] = RGSW_s(s_i) = [\{RLWE_s(g_j \cdot s_i)\}_{j \in [1,l]}, \{RLWE_s(g_j s \cdot s_i)\}_{j \in [1,l]}].$$

We will refer with bsk[$i$]$_1$ (resp. bsk[$i$]$_2$) to the leveled encryption of $s_i$ (resp. $s\, s_i$), i.e., to the first (resp. second) part of bsk[$i$]. Further, each leveled part is also indexed by $j$, so that e.g., bsk[$i$]$_{2,j}$ refers to $RLWE_s(g_j s \cdot s_i)$.

*Test polynomial.* The programmability of GINX bootstrapping comes from the so-called *test polynomial.* Suppose for simplicity that t is even. For any $f := \mathbb{Z}/t\mathbb{Z} \to \mathbb{Z}/t\mathbb{Z}$ s.t. $f(x) = -f\left(x + \frac{t}{2}\right)$, the test polynomial can be defined as

$$v = \lfloor \tfrac{q}{t} \rceil \cdot \sum_{i=0}^{N-1} f(\lfloor (i+1)\tfrac{t}{2N} \rceil) \cdot x^i \quad \in \mathcal{R}_Q.$$

It is known that solutions exist to adapt the method when function $f$ does not satisfy above negacyclicity property.

For our purpose, it is sufficient to know that a suitable

$$v \in \mathcal{R}_Q$$

encoding $f$ is given and that the *Blind Rotation* eventually computes an RLWE encryption of $v \cdot x^{-\lfloor 2N/t \rceil \mu - e}$, with nominal noise, from the LWE encryption of $\mu$. In particular, if e is not too large, the constant coefficient of the output contains an encryption of $f(\mu)$.

*Encrypted CMuxes.* The core operation in the loop of the *Blind Rotation* is the encrypted CMux gate, which starts from a RLWE encryption $C$ of some $m$ and outputs a RLWE encryption C' of

$$x^{s_i a_i} \cdot m.$$

Concretely, this is achieved by computing

$$C' \leftarrow C + ((x^{a_i} - 1) \cdot C) \circledast RGSW_s(s_i),$$

noting that

$$x^{s_i a_i} \cdot m$$

is equal to $m$ if $s_i = 0$, and to

$$x^{a_i} \cdot m$$

if $s_i = 1$.

This works in particular because the multiplication of $C$ by $x^{ai}$ is actually a negacyclic permutation of the coefficients of $C$ that does not induce any noise growth.

***Computing the Blind Rotation loop***

At very high level, the *Blind Rotation* starts from a trivial noiseless RLWE encryption

$$Acc = (0, v \cdot x^{-b}) \in \mathcal{R}_Q^2,$$

, and then sequentially applies *n* times the above-defined CMux gate

```
Function GINX Blind Rotation with binary keys (high level)
```
Require: $LWE_s(\lfloor\frac{2N}{t}\rceil\mu) = (a, b = \langle a, s\rangle + \lfloor\frac{2N}{t}\rceil\mu + e)$, bootstrapping keys bsk$[1 \dots n]$.

Ensure: A ciphertext in $RLWE_s(v \cdot x^{-\lfloor 2N/t\rceil\mu-e})$

$Acc \leftarrow (0, v \cdot x^{-b}) \in \mathcal{R}_q^2$

For $1 \leq i \leq n$

$\qquad Acc \leftarrow Acc + ((x^{a_i} - 1) \cdot Acc) \circledast \text{bsk}[i]$

End For

Return $Acc$

The external product $\circledast$ can be decomposed in two parts:

    1. a gadget decomposition $\nabla_\mathbf{g}$, applied to both mask and body of Acc , and corresponding to the given bootstrapping keys, returning a vector of *l* degree-*N* (small) polynomials;
    2. for each of the two resulting vectors of polynomials, an inner product with the body and mask of the appropriate leveled component of the bootstrapping key.

For all currently known gadget decompositions, the former must be performed in the *coefficient* domain, whereas the multiplication of degree-*N* polynomials, where *N* is relatively big, requires working in the *Fourier* or *NTT* domain. Hence, the vast majority of the computational cost of the *Blind Rotation* is actually devoted to perform several forward and backward NTTs modulo the ciphertext modulus *Q*, *at each loop iteration*.

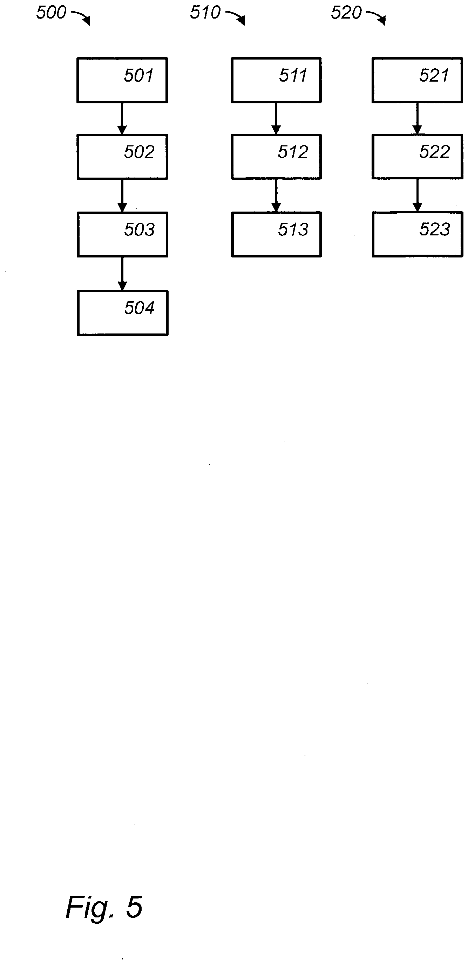

**Figure 5** schematically shows an example of an embodiment of a method 500 for an approximate gadget decomposition of an integer, a method 510 for computing a gadget vector, a method 520 for reconstructing an approximation of an integer from an approximate gadget decomposition of the integer.

Method 500 may be computer-implemented, including microprocessor, ASIC or FPGA implemented.

Method 510 may be computer-implemented, including microprocessor, ASIC or FPGA implemented.

Method 520 may be computer-implemented, including microprocessor, ASIC or FPGA implemented.

Method 500 comprises

-   obtaining (501) an input integer (*a*, 210) modulo a modulus (*Q*, 211),
-   obtaining (502) a first modulus (*Q_L*, 220) and a second modulus (*Q_H*, 230), wherein the modulus (*Q*) is a product of the first modulus (*Q_L*) and the second modulus (*Q_H*), the first and second moduli being relatively prime and larger than 1,
-   obtaining (503) a second sequence of integers (231, 232) for the second modulus (*Q_H*), wherein the second sequence has at least two integers, the product of the integers of the second sequence equals the second modulus (*Q_H*), the integers of the second sequence being pairwise co-prime, and the integers are larger than 1,
-   computing (504) the approximate gadget decomposition by computing a representative for a difference modulo each of the integers in the second sequence corresponding to the second modulus (*Q_H*), wherein the difference (*a - a_L*, 241) is between the input integer (*a*) and an integer (240) congruent to the input integer (*a*) modulo the first modulus (*Q_L*), ($a_L \equiv a \bmod Q_L$). Instead of *a - a_L*, a multiple thereof may be used, e.g., $\lambda(a - a_L)$, for some $\lambda \neq 0$. Typically $a_L$ is represented in a canonical set of representatives, e.g., centered around zero, non-negative, etc.

Method 510 comprises

- obtaining (511) a first modulus ($Q_L$, 420) and a second modulus ($Q_H$, 430), wherein the modulus ($Q$) is a product of the first modulus ($Q_L$) and the second modulus ($Q_H$), the first and second moduli being relatively prime and larger than 1,
- obtaining (512) a second sequence of integers for the second modulus ($Q_H$, 431, 432), wherein the second sequence has at least two integers, the product of the second sequence equals the second modulus ($Q_H$), the second sequence of integers are pairwise co-prime, and the integers are larger than 1,

- computing (513) the sequence ($w_j = Q_L \tilde{Q}_j \cdot$ $\left( (Q_L \tilde{Q}_j)^{-1} \bmod q_j \right)_{\mathbb{Z}}$ ;

$\tilde{Q}_j = \frac{Q_H}{q_j}$)( $w'_j = Q_L \tilde{Q}_j \cdot \left( \tilde{Q}_j^{-1} \bmod q_j \right)_{\mathbb{Z}}$ ) ($w_j = Q_L \tilde{Q}_j$), by multiplying for each integer ($q_j$) in the second sequence:

- the second modulus ($Q_H$) divided by the integer ($q_j$) ($\tilde{Q}_j = \frac{Q_H}{q_j}$),
- the first modulus ($Q_L$).

Method 520 comprises

- obtaining (521) an approximate gadget decomposition of the integer computed according to an embodiment,
- obtaining (522) a corresponding gadget vector computed according to an embodiment,
- computing (523) the dot product of the obtained approximate gadget decomposition and the corresponding gadget vector.

Many different ways of executing the method are possible, as will be apparent to a person skilled in the art. For example, the order of the steps can be performed in the shown order, but the order of the steps can be varied, or some steps may be executed in parallel. Moreover, in between steps other method steps may be inserted. The inserted steps may represent refinements of the method such as described herein or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 500, 510, and/or 520. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

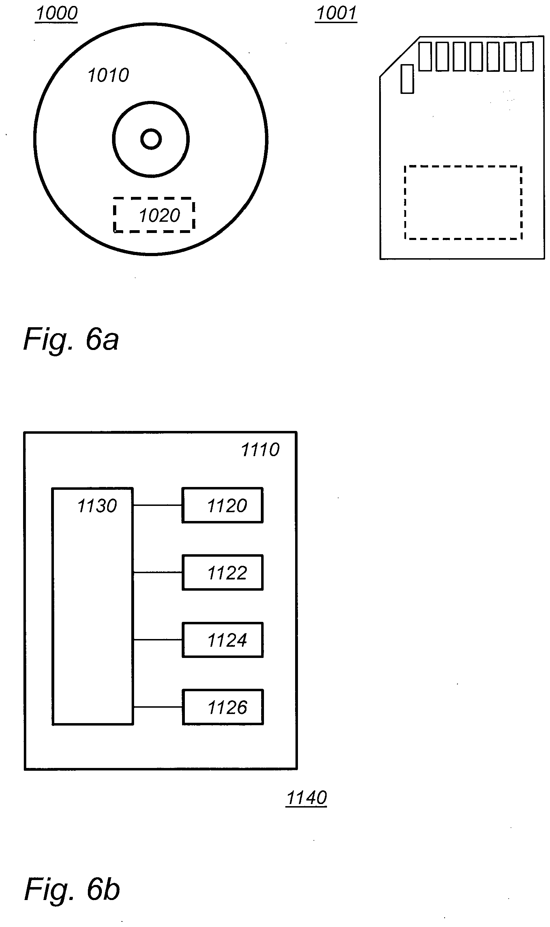

**Figure 6a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method for an approximate gadget decomposition of an integer, a method for computing a gadget vector, and/or a method for reconstructing an approximation of an integer from an approximate gadget decomposition of the integer, according to an embodiment.

The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method for an approximate gadget decomposition of an integer, method for computing a gadget vector, and/or method for reconstructing an approximation of an integer from an approximate gadget decomposition of the integer, according to an embodiment.

**Figure 6b** shows in a schematic representation of a processor system 1140 according to an embodiment of a device for an approximate gadget decomposition of an integer, a device for computing a gadget vector, and/or a device for reconstructing an approximation of an integer from an approximate gadget decomposition of the integer, according to an embodiment.

The processor system comprises one or more integrated circuits 1110. The architecture of the one or more integrated circuits 1110 is schematically shown in Figure 6b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors, or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1140 may be arranged for contact and/or contact-less communication, using an antenna and/or connectors, respectively.

For example, in an embodiment, processor system 1140, e.g., the device for an approximate gadget decomposition of an integer, the device for computing a gadget vector, and/or the device for reconstructing an approximation of an integer from an approximate gadget decomposition of the integer, according to an embodiment, may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A cryptographic method (500) for an approximate gadget decomposition of an integer, comprising

      - obtaining (501) an input integer ($a$, 210) modulo a modulus ($Q$, 211),
      - obtaining (502) a first modulus ($Q_L$, 220) and a second modulus ($Q_H$, 230), wherein the modulus ($Q$) is a product of the first modulus ($Q_L$) and the second modulus ($Q_H$), the first and second moduli being relatively prime and larger than 1,
- obtaining (503) a second sequence of integers (231, 232) for the second modulus ($Q_H$), wherein the second sequence has at least two integers, the product of the integers of the second sequence equals the second modulus ($Q_H$), the integers of the second sequence being pairwise co-prime, and the integers are larger than 1,
- computing (504) the approximate gadget decomposition by computing a representative for a difference modulo each of the integers in the second sequence corresponding to the second modulus ($Q_H$), wherein the difference ($a - a_L$, 241) is between the input integer ($a$) and an integer (240) congruent to the input integer ($a$) modulo the first modulus ($Q_L$), ($a_L \equiv a$ mod $Q_L$), or a multiple thereof.

2. A method for an approximate gadget decomposition of an integer as in Claim 1, comprising reducing the input integer ($a$) modulo the first modulus ($Q_L$) to obtain the integer congruent to the input integer ($a$) modulo the first modulus ($Q_L$).

3. A method for an approximate gadget decomposition (350) of an integer (310) as in Claim 1,

- obtaining a first sequence of integers (321, 322) for the first modulus ($Q_L$, 320), wherein the sequence has at least one integer, the product of the integers of the first sequence equals the first modulus ($Q_L$), the integers of the first sequence are pairwise co-prime, and the integers are larger than 1, wherein computing the difference modulo each of the integers in the second sequence comprises for a second specific integer ($q_j$) in the second sequence

$$(a - \sum_{u=1}^{k} \frac{Q_L}{q'_u} \cdot \left( (\frac{Q_L}{q'_u})^{-1} \cdot a \bmod q'_u \right)_{\mathbb{Z}} \bmod q_j)$$

- computing an integer ($a$ mod $q_j$, 360) equal to the input integer ($a$) modulo the second specific integer ($q_j$)
- subtracting therefrom for each first specific integer ($q'_u$) in the first sequence the product (371) modulo the second specific integer ($q_j$) of
- the first modulus ($Q_L$) divided by the first specific integer ($q'_u$),
- the input integer ($a$) multiplied with the inverse of the first modulus ($Q_L$) divided by the first specific integer ($q'_u$) modulo the first specific integer ($q'_u$) (($Q_L/q'_u$)$^{-1}$ mod $q'_u$).

4. A method as in Claim 3, wherein

- an exponent (t) is defined such that the integers in the second sequence and the first sequence are all larger than two to the power of the exponent ($2^t$), wherein the exponent is 4, 8, 16, 17, or 32, and/or
- an exponent (t) is defined such that the integers in the second sequence and the first sequence are all smaller than two to the power of the exponent ($2^t$), wherein the exponent is 8, 16, 17, 23, 32, or 64, and/or
- the integers in the second sequence and the first sequence are smaller than a machine word size, and/or
- the second sequence of integers comprises at least three integers, e.g., at least 4 integers.

5. A method as in any one of the preceding claims, wherein computing (504) the approximate gadget decomposition by computing a representative for a difference modulo each of the integers in the second sequence corresponding to the second modulus ($Q_H$d), wherein the difference ($a - a_L$, 241) is between the input integer ($a$) and an integer (240) congruent to the input integer ($a$) modulo the first modulus ($Q_L$), ($a_L \equiv a$ mod $Q_L$).

6. A method as in any one of the preceding claims, comprising

- obtaining an input polynomial having integer coefficients modulo the modulus ($Q$), wherein the coefficients of the input polynomial are represented in the approximate gadget decomposition according to any one of the preceding claims.

7. A cryptographic method (510) for computing a gadget vector for use with an approximate gadget decomposition of an integer according to any one of Claims 1-6,

- obtaining (511) a first modulus ($Q_L$, 420) and a second modulus ($Q_H$, 430), wherein the modulus ($Q$) is a product of the first modulus ($Q_L$) and the second modulus ($Q_H$), the first and second moduli being relatively prime and larger than 1,
- obtaining (512) a second sequence of integers for the second modulus ($Q_H$, 431, 432), wherein the second sequence has at least two integers, the product of the second sequence equals the second modulus ($Q_H$), the second sequence of integers are pairwise co-prime, and the integers are larger than 1,

- computing (513) the sequence ($w_j = Q_L \tilde{Q}_j \cdot \left( (Q_L \tilde{Q}_j)^{-1} \bmod q_j \right)_{\mathbb{Z}}$ ; $\tilde{Q}_j = \frac{Q_H}{q_j}$)( $w'_j = Q_L \tilde{Q}_j \cdot \left( \tilde{Q}_j^{-1} \bmod q_j \right)_{\mathbb{Z}}$ ) ($w_j = Q_L \tilde{Q}_j$) by multiplying for each integer ($q_j$) in the second sequence:

- the second modulus ($Q_H$) divided by the integer $(q_j)\,(\tilde{Q}_j = \frac{Q_H}{q_j})$ ,
- the first modulus ($Q_L$).

8. A method as in Claim 7, wherein each element in the CRT gadget vector is further multiplied with the inverse modulo the integer ($q_j$) of one of:

- the first modulus $Q_L$ times the second modulus ($Q_H$) divided by the integer $(q_j)\,(\tilde{Q}_j = \frac{Q_H}{q_j})\,\left( (Q_L \tilde{Q}_j)^{-1} \right.$ ,
- the second modulus ($Q_H$) divided by the integer $(q_j)$ ,
- the first modulus $Q_L$ (($Q_L$)$^{-1}$).

9. A cryptographic method (520) for reconstructing an approximation of an integer from an approximate gadget decomposition of the integer,

- obtaining (521) an approximate gadget decomposition of the integer computed according to any one of Claims 1-6,
- obtaining (522) a corresponding gadget vector computed according to Claim 7 or 8,
- computing (523) the dot product of the obtained approximate gadget decomposition and the corresponding gadget vector.

10. A method as in Claim 9, wherein

- integers in the approximate gadget decomposition of an integer are, up to their signs, at most half a corresponding integer in the second sequence of integers, and wherein an error between the reconstructed approximation and the integer is at most half the first modulus ($Q_L$), or
- integers in the approximate gadget decomposition of an integer smaller than a corresponding integer in the second sequence of integers, and wherein an error between the reconstructed approximation and the integer is smaller than the first modulus ($Q_L$), or
- integers in the approximate gadget decomposition of an integer are, up to their signs, at most half a corresponding integer in the second sequence of integers, and wherein an error between the reconstructed approximation and the integer is at most half the first modulus ($Q_L$) times the number of integers in a first sequence of integers for the first modulus ($Q_L$), or
- integers in the approximate gadget decomposition of an integer smaller than a corresponding integer in the second sequence of integers, and wherein an error, between the reconstructed approximation and the integer is smaller than the first modulus times the number of integers in a first sequence of integers for the first modulus ($Q_L$).

11. A cryptographic method for a fully homomorphic encrypted computation comprising

- a multiplication between an unencrypted first integer ($a$) and an FHE encrypted second integer ($x$), wherein the first integer is represented in the approximate gadget decomposition according to any one of Claims 1-6, and the second integer encrypted according to the FHE.

12. A method as in any one of the preceding claims, comprising

- obtaining an approximate gadget decomposition of a first integer ($a_1, ..., a_l$) according to any one of Claims 1-6 with respect to the second sequence of integers ($q_1, ... , q_l$) for the second modulus ($Q_H$),
- obtaining an FHE encrypted second integer ($x$), wherein the FHE encrypted second integer is obtained from

- component wise FHE encryption of a component wise multiplication between the second integer ($x$) and a gadget vector ($w_1, w_2, ...$) for the second sequence of integers ($Enc(w_ix)$),
- for each of the values in the approximate gadget decomposition of the first integer, multiply the value with the corresponding encryption of the value for the second integer ($a_i \cdot Enc(xw_i)$), obtaining the result as an FHE encrypted integer, thus obtaining a multiplication result as an encrypted approximate gadget decomposition.

13. A method as in any one of the preceding claims, comprising computing an FHE encrypted blind rotation using integers represented according to the approximate gadget representation of any one of Claims 1-6.

14. A system comprising: one or more processors; and one or more storage devices storing instructions that, when executed by the one or more processors, cause the one or more processors to perform operations for

- A method for an approximate gadget decomposition of an integer according to any one of Claims 1-6, and/or
- A method for computing a gadget vector for use with an approximate gadget decomposition of an integer according to Claim 7 or 8, and/or
- A method for reconstructing an approximation of an integer from an approximate gadget decomposition of the integer according to Claim 9, and/or
- A fully homomorphic encrypted computation according to any one of Claims 11-13.

15. A system as in Claim 14,

- wherein one or more of the processors are an Application-Specific Integrated Circuit (ASIC), and/or
- wherein one or more of the processors are a Field-Programmable Gate Array (FPGA).

16. An ASIC and/or FPGA configured to execute the method according to any one of Claims 1-13.

17. A transitory or non-transitory computer storage medium encoded with instructions that, when executed by one or more computers, cause the one or more computers to perform

- A method for computing a gadget vector for use with an approximate gadget decomposition of an integer according to any one of Claims 1-6, and/or
- A method for an approximate gadget decomposition of an integer according to Claim 7 or 8, and/or
- A method for reconstructing an approximation of an integer from an approximate gadget decomposition of the integer according to Claim 9, and/or
- A fully homomorphic encrypted computation according to any one of Claims 11-13.

100

| 110 | | 120 | | 130 |
| 111 | | 121 | | 131 |
| 112 | | 122 | | 132 |
| 113 | | 123 | | 133 |

| 140 |
| 141 |
| 142 |
| 143 |

*Fig. 1a*

102

110 —— 172 —— 120

172 —— 130

172 —— 140

*Fig. 1b*

200

211

220

230

231 | 232 | ...

210 → 240

241

250

251 | 252 | ...

Fig. 2

Fig. 3

400

411

420

421

430
431 432 ...

470
471 472 ...

480
481 482 ...

*Fig. 4a*

401

411

420

430

431 | 432 | ...

461

451

452

480

481 | 482 | ...

# Fig. 4b

Fig. 5

*1000*

*1001*

*1010*

*1020*

## Fig. 6a

*1110*

*1130*

*1120*

*1122*

*1124*

*1126*

*1140*

## Fig. 6b

Europäisches
Patentamt

European
Patent Office

Office européen
des brevets

**EUROPEAN SEARCH REPORT**

**Application Number**

EP 24 31 5176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIM MIRAN ET AL: "Accelerating HE Operations from Key Decomposition Technique", 9 August 2023 (2023-08-09), ADVANCES IN CRYPTOLOGY - CRYPTO 2023; [LECTURE NOTES IN COMPUTER SCIENCE; LECT.NOTES COMPUTER], SPRINGER NATURE SWITZERLAND, CHAM, PAGE(S) 70 - 92, XP047666713, ISSN: 0302-9743 ISBN: 978-3-031-38550-6 [retrieved on 2023-08-09] * abstract * * Chapter 1: "Introduction" * * Chapter 4: "Application to Key Switching" * ----- | 1-17 | INV. H04L9/00 |
| A | MARIYA GEORGIEVA BELORGEY ET AL: "Revisiting Key Decomposition Techniques for FHE: Simpler, Faster and More Generic", IACR, INTERNATIONAL ASSOCIATION FOR CRYPTOLOGIC RESEARCH , vol. 20230526:161653 26 May 2023 (2023-05-26), pages 1-37, XP061078061, Retrieved from the Internet: URL:https://eprint.iacr.org/archive/2023/771/1685117813.pdf [retrieved on 2023-05-30] * abstract * * Chapter 1: "Introduction" * * Chapter 2: "Preliminaries" * ----- | 1-17 | TECHNICAL FIELDS SEARCHED (IPC) H04L |

-/--

The present search report has been drawn up for all claims

| Place of search | Date of completion of the search | Examiner |
|---|---|---|
| Munich | 10 October 2024 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

<table>
<tr><td colspan="2">Europäisches Patentamt<br>European Patent Office<br>Office européen des brevets</td><td>**EUROPEAN SEARCH REPORT**</td><td>**Application Number**<br><br>EP 24 31 5176</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GENISE NICHOLAS ET AL: "Building an Efficient Lattice Gadget Toolkit: Subgaussian Sampling and More", 24 April 2019 (2019-04-24), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 655 - 684, XP047507727, ISBN: 978-3-319-10403-4 [retrieved on 2019-04-24] * abstract * * Chapter 1: "Introduction" * * Chapter 2: "Preliminaries" * * Chapter 4: "Subgaussian Gadget Decomposition" * ----- | 1-17 | |
| A | TAECHAN KIM ET AL: "Asymptotically Faster Multi-Key Homomorphic Encryption from Homomorphic Gadget Decomposition", IACR, INTERNATIONAL ASSOCIATION FOR CRYPTOLOGIC RESEARCH , vol. 20230922:003152 22 September 2023 (2023-09-22), pages 1-25, XP061081026, Retrieved from the Internet: URL:https://eprint.iacr.org/archive/2022/3 47/1695342712.pdf [retrieved on 2023-09-22] * abstract * * Chapter 1: "Introduction" * * Chapter 2: "Background" * * Chapter 3: "Overview of Prior Work" * * Chapter 4: "Homomorphic Gadget Decomposition" * ----- | 1-17 | **TECHNICAL FIELDS SEARCHED** (IPC) |

The present search report has been drawn up for all claims

| Place of search | Date of completion of the search | Examiner |
|---|---|---|
| Munich | 10 October 2024 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..................................................................................................

& : member of the same patent family, corresponding document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. CHILLOTTI et al.** TFHE: Fast fully homomorphic encryption over the torus.. *Journal of Cryptology*, 2020, vol. 33 (1), 34-91
- Faster bootstrapping with polynomial error.. **JACOB ALPERIN-SHERIFF** ; **CHRIS PEIKERT.** Advances in Cryptology - CRYPTO 2014. Springer, 2014, vol. 8616, 297-314
- Large FHE gates from tensored homomorphic accumulator. **GUILLAUME BONNORON** ; **LEO DUCAS** ; **MAX FILLINGER**. Progress in Cryptology - AFRICA CR YPT 2018. Springer, 2018, vol. 10831, 217-251
- FINAL: Faster FHE instantiated with NTRU and LWE.. **CHARLOTTE BONTE** ; **ILIA ILIASHENKO** ; **JEONGEUN PARK** ; **HILDER V. L. PEREIRA** ; **NIGEL P. SMART**. Advances in Cryptology -ASIACRYPT 2021. Springer, 2021, vol. 13792, 188-215
- **ZVIKA BRAKERSKI** ; **CRAIG GENTRY** ; **VINOD VAIKUNTANATHAN**. fully homomorphic encryption without bootstrapping. *ACM Transactions on Computation Theory*, 2014, vol. 6 (3), 13-1, 13-36
- **ZVIKA BRAKERSKI** ; **VINOD VAIKUNTANATHAN**. Efficient fully homomorphic encryption from (standard) LWE.. *SLAM Journal on Computing*, 2014, vol. 43 (2), 831-871
- Fully homomorphic encryption without modulus switching from classical GapSVP.. **ZVIKA BRAKERSKI.** Advances in Cryptology - CRYPTO 2012. Springer, 2012, vol. 7417, 868-886
- Homomorphic encryption for arithmetic of approximate numbers. **JUNG HEE CHEON** ; **ANDREY KIM** ; **MIRAN KIM** ; **YONGSOO SONG**. Advances in Cryptology - ASIACRYPT 2017. Springer, 2017, vol. 10624, 409-437
- **ILARIA CHILOTTI** ; **NICOLAS GAMA** ; **MARIYA GEORGIEVA** ; **MALIKA IZABACHENE.** TFHE: Fast fully homomorphic encryption over the torus.. *Journal of Cryptology*, 2020, vol. 33, 34-91

- Noah's Ark: Efficient Threshold-FHE using noise flooding.. **MORTEN DAHL** ; **DANIEL DEMMLER** ; **SARAH EL KAZDADY** ; **ARTHUR MEYRE** ; **JEAN-BAPTISTE ORFILA** ; **DRAGOR ROTARU** ; **NIGEL P. SMART** ; **SAMUEL TAP** ; **MICHAEL WALTER**. WAHC'23: Proceedings of the 11th Workshop on Encrypted Computing & Applized Homomorphic Cryptography. ACM, 2023, 35-46
- FHEW: Bootstrapping homomorphic encryption in less than a second.. **LÉO DUCAS** ; **DANIELE MICCIANCIO**. Advances in Cryptology - EUROCRYPT 2015,. Springer, 2015, vol. 9056, 617-640
- Homomorphic encryption from learning with errors: Conceptually-simpler, asymptotically-faster, attribute-based.. **CRAIG GENTRY** ; **AMIT SAHAI** ; **BRENT WATERS**. Advances in Cryptology - CRYPTO 2013. Springer, 2013, vol. 8042, 75-92
- Implementing BP-obfuscation using graph-induced encoding.. **SHAI HALEVI** ; **TZIPORA HALEVI** ; **VICTOR SHOUP** ; **NOAH STEPHENS-DAVIDOWITZ**. CCS '17: Proceedings of the 2017 ACM SIGSAC Conference on Computer and Communications Security,. ACM, 2017, 783-798
- Trapdoors for lattices: Simpler, tighter, faster, smaller.. **DANIELE MICCIANCIO** ; **CHRIS PEIKERT.** Advances in Cryptology - EUROCRYPT 2012. Springer, 2012, vol. 7237, 700-718
- Bootstrapping in FHEW-like cryptosys- terns.. **DANIELE MICCIANCIO** ; **YURIY POLYAKOV.** 9th Workshop on Encrypted Computing & Applied Homomorphic Cryptography (WAHC 2021),. ACM Press, 2021, 17-28
- **DINGYI PEI** ; **ARTO SALOMAA** ; **CUNSHENG DING**. Chinese Remainder Theorem: Applications in Computing, Coding, Cryptography. World Scientific Publishing Company, 1996
- **XILINX**. UltraScale architecture DSP slice. *User Guide*, August 2021, vol. 1 (11)